(19) Europäisches Patentamt
European Patent Office
Office européen des brevets

(11) EP 1 888 352 B1

(12) # EUROPÄISCHE PATENTSCHRIFT

(45) Veröffentlichungstag und Bekanntmachung des Hinweises auf die Patenterteilung:
**16.10.2013 Patentblatt 2013/42**

(21) Anmeldenummer: **06724755.1**

(22) Anmeldetag: **08.05.2006**

(51) Int Cl.:
***B60C 23/04** (2006.01)*

(86) Internationale Anmeldenummer:
**PCT/EP2006/004286**

(87) Internationale Veröffentlichungsnummer:
**WO 2006/131182 (14.12.2006 Gazette 2006/50)**

(54) **VERFAHREN UND SYSTEM ZUR BESTIMMUNG EINER RADPOSITION VON RÄDERN AN EINEM FAHRZEUG**

METHOD AND SYSTEM FOR DETERMINING A POSITION OF WHEELS ON A VEHICLE

PROCEDE ET SYSTEME POUR DETERMINER LA POSITION DES ROUES D'UN VEHICULE

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **10.06.2005 DE 102005026974**

(43) Veröffentlichungstag der Anmeldung:
**20.02.2008 Patentblatt 2008/08**

(73) Patentinhaber: **Global Dynamix AG**
**7500 St. Moritz (CH)**

(72) Erfinder: **ACHTERHOLT, Rainer**
**CH-8597 Landschlacht (CH)**

(74) Vertreter: **Samson & Partner**
**Widenmayerstrasse 5**
**80538 München (DE)**

(56) Entgegenhaltungen:
**US-B1- 6 204 758**
**US-B1- 6 237 403**
**US-B1- 6 446 502**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 1 888 352 B1

## Beschreibung

### Gebiet der Erfindung

Die vorliegende Erfindung betrifft im Allgemeinen die Überwachung von Rädern eines Fahrzeugs, wie etwa ein Landfahrzeug z.B. Personenkraftwagen, zwei-, vier- oder mehrrädrige Fahrzeuge allgemein, etc., und insbesondere die Bestimmung einer Radposition von Rädern an einem Fahrzeug.

### Hintergrund der Erfindung

Zur Überwachung von Rädern eines Fahrzeugs ist es wünschenswert, nicht nur Aussagen über den Zustand der Räder insgesamt, sondern Aussagen über jedes Rad im einzelnen machen zu können. So ist es beispielsweise erwünscht, den Fahrer nicht nur darüber informieren zu können, dass der Druck eines Reifens zu hoch oder zu niedrig ist, sondern für welches Rad dies der Fall ist. Hierfür ist es erforderlich, die jeweiligen Radpositionen der Räder am Fahrzeug (z. B. Reifen vorne links) zu kennen. Da Räder von Fahrzeugen regelmäßig demontiert werden, ist eine solche Radpositionsbestimmung nach jeder erneuten Radmontage nötig. Ansätze hierfür, dies automatisch, ohne Mitwirkung des Fahrers durchzuführen, sind bekannt.

Aus DE 196 08 478 A1 ist es z.B. bekannt, jedes Rad mit einem Sender auszustatten, der Funksignale zur einer Steuerung überträgt. Auf der Grundlage der von der Steuerung empfangenen Signalstärke kann dann auf den Abstand zwischen der Steuerung und dem jeweiligen Sender und damit auf die Radposition des entsprechenden Rades geschlossen werden. Ein Nachteil hier besteht darin, dass den einzelnen Rädern jeweils zugeordnete Empfangseinrichtungen verwendet werden, die diesen Ansatz aufwändig und teuer machen.

Aus DE 103 16 074 A1 ist es bekannt, die Radpositionen der Räder eines Fahrzeugs auf der Grundlage von Informationen, die für lenkbare bzw. gelenkte Räder den Lenkeinschlag und für alle Räder den Neigungswinkel (Sturz) angeben. Hierfür werden Bewegungssensoren zur Erfassung des jeweiligen Lenkeinschlags und Neigungssensoren zur Erfassung der Neigungswinkel verwendet. Auch hier stellt die Anzahl erforderlicher Sensoren einen Nachteil dar. Des weiteren erfolgt auch hier die Radpositionsbestimmung, indem zwei Verfahren nacheinander durchgeführt werden.

Aufgabe der vorliegenden Erfindung ist es, die Radposition eines Rades an einem Fahrzeug auf einfachere und schnellere Weise zu bestimmen, insbesondere die Anzahl hierfür verwendeter Komponenten und Verfahrensschritte zu reduzieren.

US 6,446,502 B1 offenbart die Merkmale der Oberbegriffe der unabhängigen Ansprüche.

### Kurzfassung der Erfindung

Zur Lösung dieser Aufgabe stellt die vorliegende Erfindung ein Verfahren und ein System gemäß den unabhängigen Ansprüchen bereit. Weitere Aspekte der Erfindung ergeben sich aus den abhängigen Ansprüchen, der nachfolgenden Beschreibung und der Zeichnung.

Bei dem Verfahren werden für die Räder eines Fahrzeugs jeweils wirksame Corioliskräfte ermittelt. Die für die Räder erfassten Corioliskräfte werden dann miteinander verglichen. Anhand der Vergleiche bzw. der Vergleichsergebnisse werden die Radpositionen der Räder an dem Fahrzeug bestimmt. Erfindungsgemäß werden ferner für das Fahrzeug wirksame Corioliskräfte ermittelt, die dann als Referenzgröße beim Vergleichen der für die Räder erfassten Corioliskräfte miteinander verwendet werden können.

Bei einer bevorzugten Ausführungsform werden die für Räder des Fahrzeugs jeweils wirksamen Corioliskräften ermittelt, indem für die Räder wirksame Coriolisbeschleunigungen erfasst werden.

Vorzugsweise wird das Rad als das Reserverad bestimmt, für das im Wesentlichen keine oder die kleinsten Corioliskräfte ermittelt werden.

Bei einer bevorzugten Ausführungsform wird das Rad, für das die größte Corioliskraft ermittelt wurde, als das Vorderrad des Fahrzeugs bestimmt, wenn das erfindungsgemäße Verfahren für ein Fahrzeug mit zwei Rädern durchgeführt wird.

Bei einer bevorzugten Ausführungsform wird das Rad, für das die kleinste Corioliskraft ermittelt wurden, als das Hinterrad des Fahrzeugs bestimmt, wenn das erfindungsgemäße Verfahren für ein Fahrzeug mit zwei Rädern durchgeführt wird.

Bei einer bevorzugten Ausführungsform werden für Räder des Fahrzeugs jeweils wirksame Corioliskräfte derart ermittelt, dass jeweils die wirksamen Corioliskräfte angebende Signale erzeugt werden, die für Räder an unterschiedlichen Seiten des Fahrzeugs unterschiedliche Vorzeichen aufweisen, wobei die Räder, deren Corioliskräfte angebende Signale das gleiche

Vorzeichen haben, als Räder an einer Seite des Fahrzeugs bestimmt werden können, wenn das erfindungsgemäße Verfahren für ein Fahrzeug mit vier Rädern durchgeführt wird.

Bei einer bevorzugten Ausführungsform werden für das Fahrzeug wirksame Corioliskräfte derart ermittelt, dass die wirksamen Corioliskräfte angebende Signale erzeugt werden, deren Vorzeichen sich für Kurven in unterschiedliche Richtungen unterscheiden.

Bei einer bevorzugten Ausführungsform werden die Räder, die an einer Seite des Fahrzeugs angeordnet sind, und die Räder, die an der anderen Seite des Fahrzeugs angeordnet sind, durch Vergleichen von Vorzeichen von für Räder des Fahrzeugs wirksamen Corioliskräfte angebenden Signalen und Vorzeichen von für das Fahrzeug wirksame Corioliskräfte angebenden Signalen bestimmt.

Bei einer bevorzugten Ausführungsform werden die Räder, für die im Wesentlichen gleiche Corioliskräfte ermittelt wurden und deren Corioliskräfte verglichen mit Corioliskräften der anderen Räder kleiner sind, als Hinterräder des Fahrzeugs bestimmt.

Hierbei ist es ferner vorgesehen, die Räder, deren Corioliskräfte verglichen mit Corioliskräften der Hinterräder größer sind, als Vorderräder des Fahrzeugs zu bestimmen.

Wird das erfindungsgemäße Verfahren für ein Fahrzeug, dessen Vorderräder einen Sturz aufweisen, durchgeführt, ist es vorgesehen, die Räder, für die Corioliskräfte angebende Signale im Wesentlichen gleich große Corioliskräfte angeben und unterschiedliche Vorzeichen haben, als Hinterräder zu bestimmen, und die übrigen Räder, für die Corioliskräfte angebende Signale unterschiedlich große Corioliskräfte angeben und unterschiedliche Vorzeichen haben, als Vorderräder zu bestimmen.

Wird das erfindungsgemäße Verfahren für ein Fahrzeug, dessen Vorderräder einen positiven Sturz aufweisen, durchgeführt, ist es vorgesehen, das Vorderrad, dessen Corioliskräfte verglichen mit Corioliskräften des anderen Vorderrades größer sind, als kurveninneres Vorderrad des Fahrzeugs zu bestimmen.

Wird das erfindungsgemäße Verfahren für ein Fahrzeug, dessen Vorderräder einen negativen Sturz aufweisen, durchgeführt, ist es vorgesehen, das Vorderrad, dessen Corioliskräfte verglichen mit Corioliskräften des anderen Vorderrades kleiner sind, als kurveninneres Vorderrad des Fahrzeugs zu bestimmen.

Bei einer bevorzugten Ausführungsform werden für Räder des Fahrzeugs jeweils wirksame Bahnkräften ermittelt, die für die Räder ermittelten Bahnkräfte miteinander verglichen, und Radpositionen an unterschiedlichen Seiten des Fahrzeugs anhand der Vergleiche bestimmt.

Bei einer bevorzugten Ausführungsform wird das erfindungsgemäße Verfahren nach jedem Neustart des Fahrzeugs durchgeführt, wobei es vorgesehen ist, nach Bestimmung der Radpositionen diese den Rädern bis zum nächsten Neustart fest zuzuordnen.

Bei einer anderen bevorzugten Ausführungsform wird erfindungsgemäße Verfahren durchgeführt, wenn das Fahrzeug erstmalig in Betrieb genommen wird oder wenn ein Radwechsel stattgefunden hat, wobei es vorgesehen ist, nach Bestimmung der Radpositionen diese den Rädern bis zum nächsten Radwechsel fest zuzuordnen.

Das System umfasst eine Steuerung mit einer Empfangeinrichtung und Radeinheiten, die jeweils für ein Rad eines Fahrzeugs vorgesehen sind. Jede Radeinheit umfasst eine Radesensoranordnung zur Erfassung von für das entsprechende Rad jeweils wirksamen Corioliskräften und zur Ausgabe von ermittelte Corioliskräfte angebenden Signalen, und eine Übertragungseinrichtung zur Übertragung von Signalen der Radesensoranordnung zur der Empfangseinrichtung der Steuerung. Ferner ist die Steuerung eingerichtet ist, auf der Grundlage empfangener, ermittelte Corioliskräfte angebenden Signalen die für die Räder ermittelten Corioliskräfte miteinander zur vergleichen und anhand der Vergleiche Radpositionen der Räder an dem Fahrzeug zu bestimmen.

Die Steuerung kann als separate Komponente oder durch eine auch als ECU (Electronic Control Unit) bezeichnete, zentrale Steuerung des Fahrzeugs bereitgestellt sein. Dies gilt auch für die Empfangseinrichtung der Steuerung und für weitere der Steuerung zugeordnete Komponenten, wie zum Beispiel die im Folgenden beschriebene zentrale Einheit.

Die Empfangs- und Sendeeinrichtungen können zur drahtlosen und/oder drahtgebundenen Kommunikation miteinander ausgeführt sein. So ist es beispielsweise vorgesehen, dass die Sendeeinrichtungen ihre Signale per Funk zu der Empfangseinrichtung der Steuerung übertragen oder per Funk zu einer zwischengeschalteten Einrichtung (z. B. weiterer Empfänger und/oder Antenne) übertragen, von wo aus eine drahtgebundene Signalübertragung zu der Empfangseinrichtung der Steuerung stattfindet.

Hier und im Folgenden ist unter "eingerichtet" zu verstehen, dass die Steuerung wenigstens strukturell ausgeführt ist, um die jeweils angegebenen technischen funktionalen Merkmale bereitzustellen. Darüber hinaus kann die Steuerung auch programmiert sein, um die jeweils angegebenen technischen funktionale Merkmale bereitzustellen, beispielsweise unter Verwendung von Softwarecode oder Computerprogrammen. So ist es beispielsweise vorgesehen, dass die Funktionen der Steuerung durch eine entsprechende Hardwarestruktur (z.B. ASIC) bereitgestellt werden. Die Steuerung kann auch so ausgeführt sein, dass sie eine allgemein verwendbare Hardwarestruktur aufweist, die in Verbindung mit einer entsprechenden Programmierung (z.B. fest implementierter Softwarecode, auf einem Computer lesbaren Speichermedium bereitgestelltes Computerprogramm, zum Betrieb herunterladbarer Softwarecode oder Computerprogramm) die technischen funktionalen Merkmale der Steuerung bereitstellt.

Erfindungsgemäß umfasst das System eine zentrale Einheit, die eine zentrale Sensoranordnung zur Erfassung von für das Fahrzeug wirksamen Corioliskräften und zur Ausgabe von ermittelte Corioliskräfte angebenden Signalen, und eine zentrale Übertragungseinrichtung zur Übertragung von Signalen der zentralen Sensoranordnung zur der Empfangseinrichtung der Steuerung aufweist, wobei die Steuerung vorzugsweise eingerichtet ist, die für die Räder ermittelten Corioliskräfte miteinander unter Verwendung der für das Fahrzeug ermittelten Corioliskräfte als Referenzgröße zu vergleichen.

Vorzugsweise ist die Steuerung ausgelegt ist, das Rad, für das im Wesentlichen keine oder die kleinsten Corioliskräfte ermittelt wurden, als das Reserverad des Fahrzeugs zu bestimmen.

Vorzugsweise ist die Steuerung ausgelegt, das Rad, für das die größte Corioliskraft ermittelt wurde, als das Vorderrad des Fahrzeugs zu bestimmen, wenn das Fahrzeug ein Fahrzeug mit zwei Rädern ist.

Vorzugsweise ist die Steuerung ausgelegt ist, das Rad, für das die kleinste Corioliskraft ermittelt wurde, als das Hinterrad des Fahrzeugs zu bestimmen, wenn das Fahrzeug ein Fahrzeug mit zwei Rädern ist.

Vorzugsweise sind die Radesensoreinrichtungen ausgeführt, die für die Räder jeweils wirksamen Corioliskräften so zu ermitteln, dass jeweils die wirksamen Corioliskräfte angebende Signale erzeugt werden, die für Räder an unterschiedlichen Seiten des Fahrzeugs unterschiedliche Vorzeichen ausweisen, wobei die Steuerung vorzugsweise ausgelegt ist, die Räder, für Corioliskräfte angebende Signale gleichen Vorzeichens ermittelt wurden, als Räder an einer Seite des Fahrzeugs zu bestimmen, wenn das Fahrzeug ein Fahrzeug mit vier Rädern ist.

Vorzugsweise ist die zentrale Einheit ausgelegt, die für das Fahrzeug wirksame Corioliskräfte derart zu ermitteln, dass die wirksamen Corioliskräfte angebende Signale erzeugt werden, deren Vorzeichen sich für Kurven in unterschiedliche Richtungen unterscheiden.

Vorzugsweise ist die Steuerung ausgelegt, die Räder, die an einer Seite des Fahrzeugs angeordnet sind, und die Räder, die an der anderen Seite des Fahrzeugs angeordnet sind, durch Vergleichen von Vorzeichen von Corioliskräfte angebenden Signalen und Vorzeichen von für das Fahrzeug wirksame Corioliskräfte angebenden Signalen zu bestimmen.

Vorzugsweise ist die Steuerung ausgelegt, die Räder, für die im Wesentlichen gleiche Corioliskräfte ermittelt wurden und deren Corioliskräfte verglichen mit Corioliskräften der anderen Räder kleiner sind, als Hinterräder des Fahrzeugs zu bestimmen.

Dabei ist es vorgesehen, dass die Steuerung ausgelegt ist, die Räder, deren Corioliskräfte verglichen mit Corioliskräften der Hinterräder größer sind, als Vorderräder des Fahrzeugs zu bestimmen.

Wenn erfindungsgemäße System für ein Fahrzeug, dessen Vorderräder einen Sturz aufweisen, verwendet wird; ist es vorgesehen, dass die Steuerung ausgelegt ist, die Räder, für die Corioliskräfte angebende Signale im Wesentlichen gleich große Corioliskräfte angeben und unterschiedliche Vorzeichen haben, als Hinterräder zu bestimmen, und die übrigen Räder, für die Corioliskräfte angebende Signale unterschiedlich große Corioliskräfte angeben und unterschiedliche Vorzeichen haben, als Vorderräder zu bestimmen.

Wenn erfindungsgemäße System für ein Fahrzeug, dessen Vorderräder einen positiven Sturz aufweisen, verwendet wird, ist es vorgesehen, dass die Steuerung ausgelegt ist, das Vorderrad, dessen Corioliskräfte verglichen mit Corioliskräften des anderen Vorderrades kleiner sind, als kurveninneres Vorderrad des Fahrzeugs zu bestimmen.

Wenn erfindungsgemäße System für ein Fahrzeug, dessen Vorderräder einen negativen Sturz aufweisen, verwendet wird, ist es vorgesehen, dass die Steuerung ausgelegt ist, das Vorderrad, dessen Corioliskräfte verglichen mit Corioliskräften des anderen Vorderrades größer sind, als kurveninneres Vorderrad des Fahrzeugs zu bestimmen.

Vorzugsweise sind die Radesensoranordnungen zur Erfassung von für das entsprechende Rad jeweils wirksamen Bahnkräften und zur Ausgabe von ermittelte Bahnkräfte angebenden Signalen ausgelegt, wobei es vorgesehen ist, dass die Steuerung ausgelegt ist, die für die Räder ermittelten Bahnkräfte miteinander zu vergleichen und Radpositionen an unterschiedlichen Seiten des Fahrzeugs anhand der Vergleiche zu bestimmen.

Vorzugsweise umfassen die Sensoranordnungen jeweils wenigstens einen Beschleunigungssensor, mit denen für die Räder des Fahrzeugs wirksame Coriolisbeschleunigungen ermittelt werden können, um die für die Räder des Fahrzeugs wirksamen Corioliskräfte zu ermitteln.

Dabei ist es möglich, dass die Radsensoranordnungen jeweils eingerichtet sind, die ermittelten Coriolisbeschleunigungen angebende Signale auszugeben, und die Steuerung eingerichtet ist, die Radpositionen der Räder anhand der Coriolisbeschleunigungen angebenden Signale zu bestimmen.

Alternativ ist es möglich, die Radsensoranordnungen jeweils eingerichtet sind, auf der Grundlage der ermittelten Coriolisbeschleunigungen Signale auszugeben, die die jeweiligen Corioliskräfte angeben, wobei die Steuerung wie oben ausgeführt diese zur Bestimmung der Radpositionen verwendet.

Die zentrale Sensoranordnung kann ebenfalls einen Beschleunigungssensor aufweisen, mit dem für das Fahrzeug wirksame Coriolisbeschleunigungen ermittelt werden können, um die für das Fahrzeug wirksamen Corioliskräfte zu ermitteln. Vergleichbar zu den zuvor genannten Ausführungsformen der Radsensoranordnungen kann die zentrale Sensoranordnung Coriolisbeschleunigungen oder Corioliskräfte angebende Signale erzeugen.

## Kurzbeschreibung der Zeichnungen

In der folgenden Beschreibung bevorzugter Ausführungsformen wird auf die beigefügten Figuren Bezug genommen, von denen zeigen:

Fig. 1 eine schematische Darstellung von an einem Rad eines Fahrzeugs wirkenden Kräften und Beschleunigungen,

Fig. 2 eine schematische Darstellung einer bevorzugten Ausführungsform der vorliegenden Erfindung,

Fig. 3 eine schematische Darstellung einer weiteren bevorzugten Ausführungsform der vorliegenden Erfindung,

Fig. 4 schematische Darstellungen von bei einer Kurvenfahrt unter Verwendung der Ausführungsform von Fig. 3 beispielhaften ermittelten Bahnbeschleunigungen und Coriolisbeschleunigungen,

Fig. 5 eine graphische Darstellung von bei der Ausführungsform von Fig. 3 beispielhaften ermittelten Bahnbeschleunigungen und Komponenten derselben, und

Fig. 6 eine graphische Darstellung von bei der Ausführungsform von Fig. 3 beispielhaften ermittelten Zentrifugalbeschleunigungen und Komponenten derselben.

In den Figuren gezeigte vergleichbare Komponenten sind durch gleiche Bezugszeichen angegeben.

In den Figuren verwendete Bezugszeichen geben an:

R = Rad
h = hinten
v = vorne
l = links
r = rechts
z = zentral
Z = Zentrifugalkräfte bzw. -beschleunigungen
B = Bahnkräfte bzw. -beschleunigungen
C = Corioliskräfte bzw. -beschleunigungen
RE = Radeinheit
ZE = zentrale Einheit
An = Antenne

Schwarze Pfeile in den Figuren geben die Orientierung bzw. Ausrichtung der entsprechenden Sensoranordnung an (d. h. für in Richtung der Pfeile erfasste Größen werden Signale mit positivem Vorzeichen ausgegeben).

Graue Pfeile in den Figuren geben für Räder eines Fahrzeugs wirksame Kräfte bzw. - beschleunigungen an (z. B. Zentrifugal-, Bahn- oder Corioliskräfte bzw. -beschleunigungen).

**Beschreibung bevorzugter Ausführungsformen**

Fig. 1 veranschaulicht schematisch an einem Rad eines fahrenden Fahrzeugs wirkende Kräfte bzw. Beschleunigungen. Im Folgenden wird vereinfachend angenommen, dass sich das Fahrzeug in Vorwärtsrichtung in Geradeausfahrt oder Kurvenfahrt bewegt. Diesbezügliche Ausführungen gelten entsprechend für ein Fahrzeug in Rückwärtsfahrt.

Durch Drehen des Rades aufgrund des fahrenden Fahrzeugs treten an dem Rad Zentrifugalkräfte bzw. -beschleunigungen auf, die von der Drehzahl des Rades abhängen, die wiederum durch die Geschwindigkeit des Fahrzeugs bestimmt wird.

Zentrifugalbeschleunigungen können in drei Komponenten unterteilt werden:

Eine erste Komponente, die auf translatorische Beschleunigungen, insbesondere durch Beschleunigen und Abbremsen des Fahrzeugs, zurückzuführen ist. Die erste Komponente ist bei stehendem Fahrzeug null und bei fahrendem Fahrzeug in Abhängigkeit der Fahrzeuggeschwindigkeit größer null.

Eine zweite Komponente, die auf die Erdbeschleunigung zurückzuführen ist.

Eine dritte Komponente, die auf translatorische Geschwindigkeiten zurückzuführen ist.

Bei Drehung des Rades treten ferner Bahnkräfte bzw. -beschleunigungen auf, die ebenfalls von der Drehzahl des Rades abhängen. Unter Bahnkräften bzw. -beschleunigungen werden im Folgenden insbesondere Kräfte bzw. Beschleunigen an dem Rad verstanden, die in Umfangsrichtung des Rades auftreten.

Bahnbeschleunigungen können ebenfalls in drei Komponenten unterteilt werden:

Eine erste Komponente, die auf translatorische Beschleunigungen, insbesondere durch Beschleunigen und Abbremsen des Fahrzeugs, zurückzuführen ist. Die erste Komponente ist bei stehendem oder sich gleichmäßig bewegendem Fahrzeug null und bei fahrendem Fahrzeug ungleich null.

Eine zweite Komponente, die auf die Erdbeschleunigung zurückzuführen ist.

Eine dritte Komponente, die auftranslatorische Geschwindigkeiten zurückzuführen ist. Die dritte Komponente kann auch bei gleichförmiger Bewegung des Fahrzeugs auftreten, weil Sensoren zur Erfassung von Bahnbeschleunigungen im Allgemeinen trotz gleichmäßiger Fahrzeugbewegung ungleichförmige Weg zurücklegen und dementsprechend Bahnbeschleunigungen erfassen.

Des weiteren können an dem Rad Corioliskräfte bzw. -beschleunigungen auftreten, nämlich insbesondere dann, wenn das Fahrzeug eine Kurve fährt. Corioliskräfte bzw. -beschleunigungen hängen unter anderem von der Drehzahl des Rades und dem Winkel zwischen der Bewegungsrichtung des Rades und dem Kurvenmittelpunkt ("Drehachse" des bewegten Systems "Fahrzeug") ab. Mathematisch kann der Betrag der Corioliskraft Fc (die in den Figuren mit dem Bezugszeichen C bezeichnet ist) wie folgt angegeben werden:

$$Fc = 2 * m * v * \omega * \sin\theta ,$$

wobei

m die Masse des Rades,
v den Betrag der Geschwindigkeit des Fahrzeugs,
$\omega$ die Kreisfrequenz der Drehung des Rades und
$\theta$ den Winkel zwischen der Bewegungsrichtung des Rades und dem Kurvenmittelpunkt

angeben.

Zur Erfassung von an einem Rad eines Fahrzeugs wirkenden Zentrifugal-, Bahn- und Corioliskräften bzw. -beschleunigungen können jeweils einachsige Kraft- oder Beschleunigungssensoren, zweiachsige Kraft- oder Beschleunigungssensoren zur Erfassung zweier Kraft- bzw. -beschleunigungsarten (z. B. für Corioliskräfte bzw. -beschleunigungen und für Bahnkräfte bzw. -beschleunigungen oder für Zentrifugalkräfte bzw. -beschleunigungen und für Bahnkräfte bzw. -beschleunigungen) oder Bewegungsdetektoren (z. B. Detektoren mit bewegbaren Kugeln) verwendet werden. Vorteilhaft sind aufgrund ihrer Baugröße und ihres Gewichts sogenannte MEMS-Kraft- oder Beschleunigungssensoren, wobei MEMS für "Micro ElectroMechanical System" steht.

Zur Erfassung von an einem Rad eines Fahrzeugs wirkenden Bahn- und Corioliskräften bzw. -beschleunigungen ist es vorteilhaft, die Sensoren in oder an allen Rädern in gleicher Einbaulage bzw. -orientierung anzuordnen. Geeignete Sensoren geben im Allgemeinen nicht nur den Betrag in Richtung ihrer Messachse erfasster Kräfte bzw. Beschleunigungen aus, sondern auch, ob erfasste Kräfte bzw. Beschleunigungen in Richtung der Messachse oder in entgegengesetzter Richtung wirken. Dementsprechend wird durch eine für alle Sensoren gleiche Einbaulage bzw. -orientierung erreicht, dass Sensoren für Räder an einer Seite (z. B. linke Seite) eines Fahrzeugs Bahn- und Corioliskräfte bzw. -beschleunigungen angebende Signale mit Vorzeichen ausgeben, die den Vorzeichen entgegengesetzt sind, die Bahn- und Corioliskräfte bzw. -beschleunigungen angebende Signale von Sensoren für Räder an der anderen Seite (z. B. rechte Seite) des Fahrzeugs aufweisen.

Fig. 2 veranschaulicht schematisch ein Fahrzeug (nicht bezeichnet) mit einer bevorzugten Ausführungsform des erfindungsgemäßen Systems und dient zur Erläuterung dabei vorgesehener Ausführungsformen des erfindungsgemäßen Verfahrens.

Das Fahrzeug weist vier montierte Räder Rhl, Rhr, Rvl und Rvr auf. Ferner weist das Fahrzeug ein nicht gezeigtes Reserverad auf Jedem Rad Rhl, Rhr, Rvl und Rvr ist eine Radeinheit REhl, REhr, REvl und REvr zugeordnet.

Jede Radeinheit REhl, REhr, REvl und REvr umfasst jeweils eine Radsensoranordnung (nicht gezeigt) mit einem oder mehreren Sensoren, um auf das entsprechende Rad wirkende Corioliskräfte und/oder -beschleunigungen zu erfassen. Von den Radsensoranordnungen erzeugte, erfasste Corioliskräfte und/oder -beschleunigungen angebende Signale werden unter Verwendung von in jeder Radeinheit REhl, REhr, REvl und REvr vorhandenen Sendeeinrichtungen (nicht gezeigt) zur einer Empfangseinrichtung übertragen. Im Folgenden wird davon ausgegangen, dass die Übertragung von Informationen von den Radeinheiten REhl, REhr, REvl und REvr zu der Empfangseinrichtung drahtlos erfolgt.

Die Empfangseinrichtung ist von einer Steuerung (nicht gezeigt) umfasst. Zur Veranschaulichung der Empfangseinrichtung sind in Fig. 2 vereinfachend beispielshalber zwei Antennen An gezeigt. Von den Sendeeinrichtungen der Radeinheiten REhl, REhr, Rvl und REvr übertragene Signale werden von den Antennen An empfangen und der Steuerung bereitgestellt.

Wie im Folgenden näher ausgeführt, können anstelle der Sendeeinrichtungen der Radeinheiten REhl, REhr, REvl und REvr und der Empfangseinrichtung von den Radeinheiten REhl, REhr, REvl und REvr bzw. der Steuerung umfasste Sende/Empfangseinrichtungen verwendet werden, die eine bidirektionale Informationsübertragung zwischen den Radeinheiten REhl, REhr, REvl und REvr und der Steuerung ermöglichen. Derartige Ausführungsformen können beispielsweise verwendet werden, um, wie im Folgenden beschrieben, bestimmte Radpositionen den Rädern zuzuordnen.

Die Steuerung kann optional eine zentrale Einheit ZE umfassen. Die zentrale Einheit ZE weist eine zentrale Sensoranordnung (nicht gezeigt) mit einem oder mehreren Sensoren, um auf das Fahrzeug wirkende Corioliskräfte und/oder Coriolisbeschleunigungen zu erfassen. Von der zentralen Sensoranordnungen erzeugte, erfasste Corioliskräfte und/oder -beschleunigungen angebende Signale werden unter Verwendung von einer zentralen Sendeeinrichtung (nicht gezeigt) der zentralen Einheit ZE zur der Empfangseinrichtung der Steuerung übertragen. Im Folgenden wird davon ausgegangen, dass die Übertragung von Informationen von der zentralen Einheit ZE zu der Steuerung drahtgebunden erfolgt; dies ist insbesondere vorgesehen, wenn die zentrale Einheit benachbart zu der Steuerung angeordnet oder von dieser umfasst ist.

Bei Verwendung der zentralen Einheit ZE können von der zentralen Sensoranordnung ausgegebene Signale verwendet werden, um zu bestimmen, ob das Fahrzeug eine Linkskurve oder eine Rechtskurve fährt.

Geht man von der in Fig. 2 gezeigten Anordnung aus, ist die zentrale Sensoranordnung so ausgerichtet, dass sie bei einer Linkskurve positive, aktuelle Corioliskräfte und/oder -beschleunigungen angebende Signale Cz ausgibt und bei einer Rechtskurve negative, aktuelle Corioliskräfte und/oder -beschleunigungen angebende Signale Cz ausgibt.

Geht man weiter von der in Fig. 2 gezeigten Anordnung aus, sind die Radsensoranordnungen der Radeinheiten REhl, REvl, REhr und REvr in oder an den Rädern Rhl, Rvl, Rhr und Rvr in gleicher Orientierung angeordnet.

Gemäß der in Fig. 2 gezeigten Anordnung sind die Radsensoranordnungen der Radeinheiten REhl und REvl an der linken Fahrzeugseite so ausgerichtet, dass sie bei einer Linkskurve positive, aktuelle Corioliskräfte und/oder -beschleunigungen angebende Signale Chl bzw. Cvl ausgeben und bei einer Rechtskurve negative, aktuelle Corioliskräfte und/oder - beschleunigungen angebende Signale Chl bzw. Cvl ausgeben.

Gemäß der in Fig. 2 gezeigten Anordnung sind die Radsensoranordnungen der Radeinheiten REhr und REvr an der rechten Fahrzeugseite so ausgerichtet, dass sie bei einer Linkskurve negative, aktuelle Corioliskräfte und/oder -beschleunigungen angebende Signale Chr bzw. Cvr ausgeben und bei einer Rechtskurve positive, aktuelle Corioliskräfte und/oder -beschleunigungen angebende Signale Chr bzw. Cvr ausgeben.

Dementsprechend ist durch Vergleiche der Vorzeichen der von der zentralen Sensoranordnung ausgegebenen Signale Cz und der Vorzeichen der von Radsensoranordnungen der Radeinheiten REhl, REvl, REhr und REvr ausgegebenen Signale Chl, Cvl, Chr und Cvr möglich, zu bestimmen, welche Radeinheiten an der linken Fahrzeugseite und welche Radeinheiten an der rechten Fahrzeugseite angeordnet sind.

Die Bewegungsrichtung der Vorderräder Rvl und Rvr und die Bewegungsrichtung der Hinterräder Rhl und Rhr bezüglich des Kurvenmittelpunks unterscheiden sich aufgrund des zur Kurvenfahrt erforderlichen Lenkeinschlags der Vorderräder Rvl und Rvr.

Die Bewegungsrichtung der Vorderräder Rvl und Rvr folgt im Wesentlichen dem Kurvenradius. Daher kann von einem Winkel $\theta$ zwischen der Bewegungsrichtung der Vorderräder Rvl und Rvr und dem Kurvenmittelpunkt von etwa 90° und einem Sinus dieses Winkels ($\sin \theta$) von etwa 1 ausgegangen werden.

Demgegenüber folgt die Bewegungsrichtung der Hinterräder Rhl und Rhr nicht dem Kurvenradius, sondern verläuft tangential dazu. Daher kann von einem Winkel $\theta$ zwischen der Bewegungsrichtung der Hinterräder Rhl und Rhr und dem Kurvenmittelpunkt von ungleich 90° und einem Sinus dieses Winkels ($\sin \theta$) ungleich 1 ausgegangen werden.

Daraus ergibt sich, dass für die Vorderräder Rvl und Rvr größere Corioliskräfte bzw. -beschleunigungen wirksam sind als für die Hinterräder Rhl und Rhr.

Durch Vergleiche der von Radsensoranordnungen der Radeinheiten REhl, REvl, REhr und REvr ausgegebenen Signale ist es möglich, zu bestimmen, welche Radeinheiten am Fahrzeug vorne und welche Radeinheiten am Fahrzeug hinten angeordnet sind.

In Verbindung mit der Bestimmung, welche Radeinheiten sich an welcher Fahrzeugseite befinden, kann für jede Radeinheit und damit für jedes Rad die Position am Fahrzeug bestimmt werden.

Das Reserverad kann ebenfalls ermittelt werden. Das Reserverad weist eine mit den Radsensoranordnungen der Radeinheiten REhl, REvl, REhr und REvr vergleichbare Sensoranordnung auf, die in der für die Radsensoranordnungen der Radeinheiten REhl, REvl, REhr und REvr erläuterten Orientierung in oder am Reserverad angeordnet ist. Aufgrund der im Allgemeinen horizontalen oder quer zur Fahrtrichtung vertikalen Positionierung des Reserverades werden von der Radsensoranordnung des Reserverades im Wesentlichen keine oder, z. B. aufgrund der Fahrzeugneigung bei Kurvenfahrt, nur geringe Corioliskräfte und/oder - beschleunigungen erfasst. Dementsprechend kann die Radeinheit, von der keine oder die kleinsten Corioliskräfte und/oder -beschleunigungen ermittelt werden, als die Radeinheit des Reserverades und damit das Reserverad bestimmt werden.

Sind die Position der Radeinheiten bzw. der Räder bestimmt, ist es vorgesehen, den Radeinheiten wenigstens während des aktuellen Betriebs des Fahrzeugs die jeweilige Position fest zuzuordnen. Dies kann beispielsweise erfolgen, indem die Steuerung den Radeinheiten jeweils eine Kennung zuordnet und diese zu der entsprechenden Radeinheit überträgt. Bei nachfolgenden Datenübertragung von den Radeinheiten, beispielsweise in Form von Reifendrücke angebenden Signalen, werden die jeweiligen Kennung mit zu der Steuerung übertragen. Dies ermöglicht der Steuerung festzustellen, von welcher Radeinheit bzw. für welches Rad die Daten übertragen wurden.

Wird die zentrale Einheit ZE nicht verwendet, ist es vorgesehen, die Unterscheidung zwischen Rädern an der linken Fahrzeugseite und Rädern an der rechten Fahrzeugseite nur anhand der ermittelten Corioliskräfte und/oder -beschleunigungen vorzunehmen.

Fahrzeugräder weisen üblicherweise einen Sturz auf. Während sich der Sturz von Hinterrädern im Allgemeinen bei einer Kurvenfahrt nicht ändert, ändert sich der Sturz der Vorderräder gegenüber dem Sturz bei Geradausfahrt. Ferner ändert sich bei Kurvenfahrt der Sturz des kurveninneren Rades anders als der Sturz des kurvenäußeren Rades.

Haben die Vorderräder bei Geradausfahrt jeweils einen negativen Sturz, so wird der Sturz des kurveninneren Vorderrades "weniger negativ", während der Sturz des kurvenäußeren Vorderrades "stärker negativ" wird. Geht man von einer bezüglich der Radmittenebene senkrechten Anordnung der Radeinheiten aus (Messrichtung senkrecht zur Radmittenebene), werden für das kurveninnere Vorderrad größere Corioliskräfte und/oder -beschleunigungen als für das kurvenäußere Vorderrad erfasst, weil die Anteile der Corioliskräfte bzw. -beschleunigungen in der Messrichtung der Sensoranordnung des kurveninneren Vorderrades größer als die Anteile der Corioliskräfte bzw. -beschleunigungen in der Messrichtung der Sensoranordnung des kurvenäußeren Vorderrades sind.

Haben die Vorderräder bei Geradausfahrt jeweils einen positiven Sturz, so wird der Sturz des kurveninneren Vorderrades "stärker positiv", während der Sturz des kurvenäußeren Vorderrades "weniger positiv" wird. Geht man von einer bezügliche der Radmittenebene senkrechten Anordnung der Radeinheiten aus (Messrichtung senkrecht zur Radmittenebene), werden für das kurveninnere Vorderrad kleinere Corioliskräfte und/oder -beschleunigungen als für das kurvenäußere Vorderrad ermittelt, weil die Anteile der Corioliskräfte bzw. -beschleunigungen in der Messrichtung der Sensoranordnung des kurveninneren Vorderrades kleiner als die Anteile der Corioliskräfte bzw. -beschleunigungen in der Messrichtung der Sensoranordnung des kurvenäußeren Vorderrades sind.

Die Radeinheiten an der Vorderseite des Fahrzeugs und die Radeinheiten an der Hinterseite des Fahrzeugs können, wie oben ausgeführt, anhand der für Vorderräder und für Hinterräder unterschiedlichen großen Corioliskräfte und/oder -beschleunigungen bestimmt werden.

Ergänzend oder alternativ können die Radeinheiten an der Vorderseite des Fahrzeugs und die Radeinheiten an der Hinterseite des Fahrzeugs wie folgt bestimmt werden. Radeinheiten an den Hinterrädern liefern Signale, die etwa gleich große Corioliskräfte und/oder -beschleunigungen angeben, aber unterschiedliche Vorzeichen haben. Radeinheiten an den Vorderrädern liefern Signale, die unterschiedliche Corioliskräfte und/oder -beschleunigungen angeben und unterschiedliche Vorzeichen haben. Aus diesen Informationen können vordere und hintere Radeinheiten bestimmt werden.

Abhängig von dem für die Vorderräder vorgesehenen Sturz kann durch Vergleiche der für die von den vorderen Radeinheiten erfassten Corioliskräfte und/oder -beschleunigungen bestimmt werden, welche eine in oder am kurveninneren Vorderrad angeordnete Radeinheit und welche eine in oder am kurvenäußeren Vorderrad angeordnete Radeinheit ist. Anhand der Vorzeichen der von den Radeinheiten gelieferten Signale ist dann eine Bestimmung möglich, welche eine in oder am kurveninneren Hinterrad angeordnete Radeinheit und welche eine in oder am kurvenäußeren Hinterrad angeordnete Radeinheit ist.

Die Komponenten der in Fig. 3 schematische veranschaulichten Ausführungsform entsprechen, abgesehen von den folgenden Unterschieden, im Wesentlichen den Komponenten der Ausführungsform von Fig. 2, weshalb die oben unter Bezugnahme auf Aufbau, Funktion und Betriebsweise der Ausführungsform von Fig. 2 gemachten Ausführungen für Ausführungsform von Fig. 3 in soweit entsprechend gelten.

Die Radeinheiten REhl, REvl, REhr und REvr der Ausführungsform von Fig. 3 weisen Radsensorordnungen (nicht gezeigt) auf, die, zusätzlich zur Erfassung von Corioliskräften oder - beschleunigungen, zur Erfassung von Bahnkräften und/oder -beschleunigungen und/oder Zentrifugalkräften oder -beschleunigungen ausgelegt sind.

Die zentrale Einheit ZE der Ausführungsform von Fig. 3 weist eine zentrale Sensorordnung (nicht gezeigt) auf, die, zusätzlich zur Erfassung von Corioliskräften oder -beschleunigungen, zur Erfassung von Bahnkräften oder -beschleunigungen und/oder Zentrifugalkräften oder - beschleunigungen ausgelegt ist.

Bei der Ausführungsform von Fig. 3 kann die Bestimmung von Positionen der Radeinheiten und damit einer Radposition, wie für die Ausführungsform von Fig. 2 bei Verwendung der zentralen Einheit ZE beschrieben, anhand für Fahrzeugräder und das Fahrzeug ermittelter Corioliskräfte und/oder -beschleunigungen erfolgen.

Ferner kann bei der Ausführungsform von Fig. 3 die Bestimmung von Positionen der Radeinheiten und damit einer Radposition, wie für die Ausführungsform von Fig. 2 ohne Verwendung der zentralen Einheit ZE beschrieben, anhand für Fahrzeugräder ermittelter Corioliskräfte und/oder -beschleunigungen erfolgen.

Insbesondere bei der zuletzt genannten Bestimmung einer Radposition ist es vorgesehen anhand von für Fahrzeugräder ermittelten Bahnkräften oder -beschleunigungen und/oder Zentrifugalkräften oder -beschleunigungen zwischen Radeinheiten und damit Radpositionen an der linken Fahrzeugseite und Radeinheiten und damit Radpositionen an der rechten Fahrzeugseite zu unterscheiden.

Im Folgenden wird davon ausgegangen, dass die Radsensoranordnungen der Radeinheiten REhl, REvl, REhr und REvr ausgelegt sind, sowohl Bahnkräfte oder -beschleunigungen als auch Zentrifugalkräfte oder -beschleunigungen zu erfassen. Es sind aber auch Radeinheiten REhl, REvl, REhr und REvr vorgesehen, deren Radsensoranordnungen entweder nur Bahnkräfte oder -beschleunigungen oder nur Zentrifugalkräfte oder -beschleunigungen erfassen. Für solche Ausführungsformen gelten die jeweils zutreffenden der folgenden Ausführungen entsprechend.

Geht man weiter von der in Fig. 3 gezeigten Anordnung aus, sind die Radsensoranordnungen der Radeinheiten REhl, REvl, REhr und REvr in oder an den Rädern Rhl, Rvl, Rhr und Rvr in gleicher Orientierung angeordnet.

Gemäß der in Fig. 3 gezeigten Anordnung sind die Radsensoranordnungen der Radeinheiten REhl und REvl an der linken Fahrzeugseite so ausgerichtet, dass sie bei Geradeausfahrt positive, aktuelle Bahnkräfte oder -beschleunigungen angebende Signale Bhl bzw. Bvl ausgeben, und die Radsensoranordnungen der Radeinheiten REhr und REvr an der rechten Fahrzeugseite so ausgerichtet, dass sie bei Geradausfahrt negative, aktuelle Bahnkräfte oder -beschleunigungen angebende Signale Bhr bzw. Bvr ausgeben.

Dementsprechend ist es durch einen Vergleich der Vorzeichen der von Radsensoranordnungen der Radeinheiten REhl, REvl, REhr und REvr ausgegebenen Signale Bhl, Bvl, Bhr und Bvr möglich, zu bestimmen, welche Radeinheiten an der linken Fahrzeugseite und welche Radeinheiten an der rechten Fahrzeugseite angeordnet sind.

Bei einer Kurvenfahrt an den Rädern jeweils wirksame Bahnbeschleunigungen und Coriolisbeschleunigungen sind in Fig. 4 insbesondere dahingehend idealisiert veranschaulicht, als keine an den Hinterrädern Rhl und Rhr wirksame Coriolisbeschleunigungen gezeigt sind. Die unterschiedlichen Vorzeichen der Coriolisbeschleunigungen angebenden Signale in Fig. 4 unten rechts ergeben sich aus der orientierungsgleichen Anordnung der Radsensoranordnungen der Radeinheiten REhl, REvl, REhr und REvr.

Wie sich aus Fig. 4 oben rechts ergibt, kann anhand der Bahnbeschleunigungen angebenden Signale zwischen Rädern auf der linken Fahrzeugseite und Rädern auf der rechten Fahrzeugseite unterschieden werden. Wie sich aus Fig. 4 unten rechts ergibt, kann anhand der Coriolisbeschleunigungen angebenden Signale zwischen Vorderrädern und Hinterrädern unterschieden werden. Anhand dieser Informationen können die Radeinheiten REhl, REvl, REhr und REvr und die Räder Rhl, Rvl, Rhr und Rvr so einander zugeordnet werden, dass eine eindeutige Bestimmung der jeweiligen Position der Räder Rhl, Rvl, Rhr und Rvr an dem Fahrzeug möglich ist.

Fig. 5 zeigt eine beispielhafte graphische Darstellung von mit einer Radsensoranordnung erfassten Bahnbeschleunigungen, in der die oben genannten drei Komponenten angebende Signalverläufe, ein insgesamt wirkende Bahnbeschleunigungen angebender Signalverlauf und ein Signalverlauf gezeigt sind, der den Unterschied zwischen dem insgesamt wirkende Bahnbeschleunigungen angebenden Signalverlauf und einem entsprechenden Signalverlauf einer auf der anderen Fahrzeugseite angeordneten Radeinheit angibt.

Ferner sind gemäß der in Fig. 3 gezeigten Anordnung die Radsensoranordnungen der Radeinheiten REhl, REvl, REhr und REvr so ausgerichtet, dass sie bei fahrendem Fahrzeug positive, aktuelle Zentrifugalkräfte oder -beschleunigungen angebende Signale Zhl, Zvl, Zhr und Zvr ausgeben.

Fig. 6 zeigt eine beispielhafte graphische Darstellung von mit einer Radsensoranordnung erfassten Zentrifugalbeschleunigungen, in der die oben genannten drei Komponenten angebende Signalverläufe und ein insgesamt wirkende Zentrifugalbeschleunigungen angebender Signalverlauf gezeigt sind.

## Patentansprüche

1. Verfahren zur Bestimmung einer Radposition von Rädern an einem Fahrzeug, mit folgenden Schritten:

   - Ermitteln von für Räder eines Fahrzeugs jeweils wirksamen Corioliskräften,
   - Vergleichen der für die Räder ermittelten Corioliskräfte miteinander, und
   - Bestimmen einer Radposition der Räder an dem Fahrzeug anhand der Vergleiche,

   **gekennzeichnet durch** die folgenden Schritte:

   - Ermitteln von für das Fahrzeug wirksamen Corioliskräften, und
   - Vergleichen der für die Räder ermittelten Corioliskräfte miteinander unter Verwendung der für das Fahrzeug ermittelten Corioliskräfte als Referenzgröße.

2. Verfahren nach Anspruch 1, mit folgendem Schritt:

   - Ermitteln der für Räder des Fahrzeugs jeweils wirksamen Corioliskräfte, indem für die Räder wirksame Coriolisbeschleunigungen ermittelt werden.

3. Verfahren nach einem der vorherigen Ansprüche, mit folgendem Schritt:

   - Bestimmen des Rades, für das im Wesentlichen keine oder die kleinsten Corioliskräfte ermittelt wurden, als das Reserverad des Fahrzeugs.

4. Verfahren nach einem der vorherigen Ansprüche, mit folgendem Schritt:

   - Bestimmen des Rades, für das die größten Corioliskräfte ermittelt wurden, als das Vorderrad des Fahrzeugs, wenn die Schritte nach einem der vorherigen Ansprüche für ein Fahrzeug mit zwei Rädern durchgeführt werden.

5. Verfahren nach einem der vorherigen Ansprüche, mit folgendem Schritt:

   - Bestimmen des Rades, für das die kleinsten Corioliskräfte ermittelt wurden, als das Hinterrad des Fahrzeugs, wenn die Schritte nach einem der vorherigen Ansprüche für ein Fahrzeug mit zwei Rädern durchgeführt werden.

6. Verfahren nach einem der vorherigen Ansprüche, mit folgenden Schritten:

   - Ermitteln der für Räder des Fahrzeugs jeweils wirksamen Corioliskräfte derart, dass jeweils die wirksamen Corioliskräfte angebende Signale (Cvl, Cvr, Chl, Chr) erzeugt werden, die für Räder an unterschiedlichen Seiten des Fahrzeugs unterschiedliche Vorzeichen aufweisen, und
   - Bestimmen der Räder, für die Corioliskräfte angebende Signale gleichen Vorzeichens ermittelt wurden, als Räder an einer Seite des Fahrzeugs, wenn die Schritte nach einem der vorherigen Ansprüche für ein Fahrzeug mit vier Rädern durchgeführt werden.

**7.** Verfahren nach Anspruch 6, wobei zum Erzeugen der wirksamen Corioliskräfte angebenden Signale jeweils eine einem Rad des Fahrzeugs zugeordnete Radsensoranordnung verwendet wird.

**8.** Verfahren nach einem der vorherigen Ansprüche, mit folgenden Schritten:

- Ermitteln der für das Fahrzeug wirksamen Corioliskräfte derart, dass die wirksamen Corioliskräfte angebende Signale ($C_z$) erzeugt werden; deren Vorzeichen sich für Kurven in unterschiedliche Richtungen unterscheiden.

**9.** Verfahren nach einem der vorherigen Ansprüche, mit folgenden Schritten:

- Bestimmen der Räder, die an einer Seite des Fahrzeugs angeordnet sind, und der Räder, die an der anderen Seite des Fahrzeugs angeordnet sind, durch Vergleichen von Vorzeichen von für Räder des Fahrzeugs wirksamen Corioliskräfte angebenden Signalen (Cvl, Cvr, Chl, Chr) und Vorzeichen von für das Fahrzeug wirksame Corioliskräfte angebenden Signalen ($C_z$).

**10.** Verfahren nach einem der vorherigen Ansprüche, mit folgendem Schritt:

- Bestimmen der Räder, für die im Wesentlichen gleiche Corioliskräfte ermittelt wurden und deren Corioliskräfte verglichen mit Corioliskräften der anderen Räder kleiner sind, als Hinterräder des Fahrzeugs.

**11.** Verfahren nach Anspruch 9, mit folgendem Schritt:

- Bestimmen der Räder, deren Corioliskräfte verglichen mit Corioliskräften der Hinterräder größer sind, als Vorderräder des Fahrzeugs.

**12.** Verfahren nach einem der Ansprüche 1 bis 11, mit folgenden Schritten:

- Durchführen der Schritte nach einem der vorherigen Ansprüche an einem Fahrzeug, dessen Vorderräder einen Sturz aufweisen,
- Bestimmen der Räder, für die Corioliskräfte angebende Signale (Cvl, Cvr, Chl, Chr) im Wesentlichen gleich große Corioliskräfte angeben und unterschiedliche Vorzeichen haben, als Hinterräder, und
- Bestimmen der übrigen Räder, für die Corioliskräfte angebende Signale (Cvl, Cvr, Chl, Chr) unterschiedlich große Corioliskräfte angeben und unterschiedliche Vorzeichen haben, als Vorderräder.

**13.** Verfahren nach einem der Ansprüche 1 bis 11, mit folgenden Schritten:

- Durchführen der Schritte nach einem der vorherigen Ansprüche für ein Fahrzeug, dessen Vorderräder einen positiven Sturz aufweisen, und
- Bestimmen des Vorderrades, dessen Corioliskräfte verglichen mit Corioliskräften des anderen Vorderrades kleiner sind, als kurveninneres Vorderrad des Fahrzeugs.

**14.** Verfahren nach einem der Ansprüche 1 bis 11, mit folgenden Schritten:

- Durchführen der Schritte nach einem der vorherigen Ansprüche für ein Fahrzeug, dessen Vorderräder einen negativen Sturz aufweisen, und
- Bestimmen des Vorderrades, dessen Corioliskräfte verglichen mit Corioliskräften des anderen Vorderrades größer sind, als kurveninneres Vorderrad des Fahrzeugs.

**15.** Verfahren nach einem der vorherigen Ansprüche, mit folgenden Schritten:

- Ermitteln von für die Räder des Fahrzeugs jeweils wirksamen Bahnkräften (Bvl, Bvr, Bhl, Bhr),
- Vergleichen der für die Räder ermittelten Bahnkräfte (Bvl, Bvr, Bhl, Bhr) miteinander, und
- Bestimmen einer Radposition an unterschiedlichen Seiten des Fahrzeugs anhand der Vergleiche.

**16.** Verfahren nach Anspruch 15, wobei bei Ermitteln der Bahnkräfte jeweils einem Rad des Fahrzeugs zugeordnete Radsensoranordnungen verwendet werden, die die entsprechenden Bahnkräfte entwikkeln und Bahnkräfte angebende Signale ausgeben.

**17.** Verfahren nach einem der vorherigen Ansprüche, mit folgenden Schritten:

- Durchführen der Schritte nach einem der vorherigen Ansprüche nach jedem Neustart des Fahrzeugs, und
- Zuordnen der Radpositionen zu den Rädern bis zum nächsten Neustart.

**18.** Verfahren nach einem der vorherigen Ansprüche, mit folgenden Schritten:

- Durchführen der Schritte nach einem der vorherigen Ansprüche nach einer erstmaligen Inbetriebnahme des Fahrzeugs oder erst nach einem Radwechsel, und

- Zuordnen der Radpositionen zu den Rädern bis zum nächsten Radwechsel.

**19.** System zur Bestimmung einer Radposition von Rädern an einem Fahrzeug, mit:

- einer Steuerung mit einer Empfangeinrichtung (An), und
- Radeinheiten (REvl, REvr, REhl, REhr), die jeweils für ein Rad eines Fahrzeugs vorgesehen sind und jeweils umfassen

  - eine Radsensoranordnung zur Erfassung von für das entsprechende Rad wirksamen Corioliskräften und zur Ausgabe von ermittelte Corioliskräfte angebenden Signalen (Cvl, Cvr, Chl, Chr), und
  - eine Übertragungseinrichtung zur Übertragung von Signalen der Radsensoranordnung zur der Empfangseinrichtung (An) der Steuerung, wobei

- die Steuerung eingerichtet ist, auf der Grundlage der übertragenen Signale die für die Räder ermittelten Corioliskräfte miteinander zur vergleichen und anhand der Vergleiche die Radposition der Räder an dem Fahrzeug zu bestimmen,

**gekennzeichnet durch**

- eine zentrale Einheit (ZE), die aufweist

  - eine zentrale Sensoranordnung zur Erfassung von für das Fahrzeug wirksamen Corioliskräften und zur Ausgabe von ermittelte Corioliskräfte angebenden Signalen, und
  - eine zentrale Übertragungseinrichtung zur Übertragung von Signalen der zentralen Sensoranordnung zur der Empfangseinrichtung der Steuerung, wobei
  - die Steuerung eingerichtet ist, die für die Räder ermittelten Corioliskräfte miteinander unter Verwendung der für das Fahrzeug ermittelten Corioliskräfte als Referenzgröße zu vergleichen.

**20.** System nach Anspruch 19, bei dem

- die Steuerung ausgelegt ist, das Rad, für das im Wesentlichen keine oder die kleinsten Corioliskräfte ermittelt wurden, als das Reserverad des Fahrzeugs zu bestimmen.

**21.** System nach Anspruch 19 oder 20, bei dem

- die Steuerung ausgelegt ist, das Rad, für das die größten Corioliskräfte ermittelt wurde, als das Vorderrad des Fahrzeugs zu bestimmen, wenn das Fahrzeug ein Fahrzeug mit zwei Rädern ist.

**22.** System nach einem der Ansprüche 19 bis 21, bei dem

- die Steuerung ausgelegt ist, das Rad, für das die kleinsten Corioliskräfte ermittelt wurde, als das Hinterrad des Fahrzeugs zu bestimmen, wenn das Fahrzeug ein Fahrzeug mit zwei Rädern ist.

**23.** System nach einem der Ansprüche 19 bis 22, bei dem

- die Radsensoreinrichtungen ausgeführt sind, um die für die Räder eines Fahrzeugs wirsamen Corioliskräfte so zu ermitteln, dass jeweils die wirksamen Corioliskräfte angebende Signale (Cvl, Cvr, Chl, Chr) erzeugt werden, die für Räder an unterschiedlichen Seiten des Fahrzeugs unterschiedliche Vorzeichen ausweisen, und
- die Steuerung ausgelegt ist, die Räder, für Corioliskräfte angebende Signale gleichen Vorzeichens ermittelt wurden, als Räder an einer Seite des Fahrzeugs zu bestimmen, wenn das Fahrzeug ein Fahrzeug mit vier Rädern ist.

**24.** System nach einem der Ansprüche 19 bis 23, bei dem

- die zentrale Einheit (ZE) ausgelegt ist, die für das Fahrzeug wirksamen Corioliskräfte derart zu ermitteln, dass die wirksamen Corioliskräfte angebende Signale ($C_z$) erzeugt werden, deren Vorzeichen sich für Kurven in unterschiedliche Richtungen unterscheiden.

**25.** System nach einem der Ansprüche 19 bis 24, bei dem

- die Steuerung ausgelegt ist, die Räder, die an einer Seite des Fahrzeugs angeordnet sind, und die Räder, die an der anderen Seite des Fahrzeugs angeordnet sind, durch Vergleichen von Vorzeichen von für Räder wirksamen Corioliskräfte angebenden Signalen (Cvl, Cvr, Chl, Chr) und Vorzeichen von für das Fahrzeug wirksame Corioliskräfte angebenden Signalen ($C_z$) zu bestimmen.

**26.** System nach einem der Ansprüche 19 bis 25, bei dem

- die Steuerung ausgelegt ist, die Räder, für die im Wesentlichen gleiche Corioliskräfte ermittelt wurden und deren Corioliskräfte verglichen mit Corioliskräften der anderen Räder kleiner sind, als Hinterräder des Fahrzeugs zu bestimmen.

**27.** System nach Anspruch 26, bei dem

- die Steuerung ausgelegt ist, die Räder, deren Corioliskräfte verglichen mit Corioliskräften der Hinterräder größer sind, als Vorderräder des Fahrzeugs zu bestimmen.

**28.** System nach einem der Ansprüche 19 bis 27 bei Verwendung für ein Fahrzeug, dessen Vorderräder einen Sturz aufweisen, bei dem

- die Steuerung ausgelegt ist, die Räder, für die Corioliskräfte angebende Signale (Cvl, Cvr, Chl, Chr) im Wesentlichen gleich große Corioliskräfte angeben und unterschiedliche Vorzeichen haben, als Hinterräder zu bestimmen, und
- die Steuerung ausgelegt ist, die übrigen Räder, für die Corioliskräfte angebende Signale (Cvl, Cvr, Chl, Chr) unterschiedlich große Corioliskräfte angeben und unterschiedliche Vorzeichen haben, als Vorderräder zu bestimmen.

**29.** System nach einem der Ansprüche 19 bis 28 bei Verwendung für ein Fahrzeug, dessen Vorderräder einen positiven Sturz aufweisen, bei dem

- die Steuerung ausgelegt ist, das Vorderrad, dessen Corioliskräfte verglichen mit Corioliskräften des anderen Vorderrades kleiner sind, als kurveninneres Vorderrad des Fahrzeugs zu bestimmen.

**30.** System nach einem der Ansprüche 19 bis 28 bei Verwendung für ein Fahrzeug, dessen Vorderräder einen negativen Sturz aufweisen, bei dem

- die Steuerung ausgelegt ist, das Vorderrad, dessen Corioliskräfte verglichen mit Corioliskräften des anderen Vorderrades größer sind, als kurveninneres Vorderrad des Fahrzeugs zu bestimmen.

**31.** System nach einem der Ansprüche 19 bis 30, bei dem

- die Radsensoranordnungen zur Erfassung von für das entsprechende Rad jeweils wirksamen Bahnkräften und zur Ausgabe von ermittelte Bahnkräfte angebenden Signalen (Bvl, Bvr, Bhl, Bhr) ausgelegt sind, und
- die Steuerung ausgelegt ist, die für die Räder ermittelten Bahnkräfte miteinander zu vergleichen und Radpositionen an unterschiedlichen Seiten des Fahrzeugs anhand der Vergleiche zu bestimmen.

**32.** System nach einem der Ansprüche 19 bis 31, bei dem

- die Radsensoranordnungen jeweils wenigstens einen Beschleunigungssensor, umfassen, um zum Ermitteln der für die Räder des Fahrzeugs wirksamen Corioliskräfte für die Räder des Fahrzeugs wirksame Coriolisbeschleunigungen zu erfassen.

**33.** System nach Anspruch 32, bei dem

- die Radsensoranordnungen jeweils eingerichtet sind, die ermittelten Coriolisbeschleunigungen angebende Signale (Cvl, Cvr, Chl, Chr) auszugeben, und
- die Steuerung eingerichtet ist, die Radpositionen der Räder anhand der Coriolisbeschleunigungen angebenden Signale (Cvl, Cvr, Chl, Chr) zu bestimmen.

**34.** System nach Anspruch 32, bei dem

- die Radsensoranordnungen jeweils eingerichtet sind, auf der Grundlage der ermittelten Coriolisbeschleunigungen Signale (Cvl, Cvr, Chl, Chr) auszugeben, die die jeweiligen Corioliskräfte angeben.

**35.** System nach einem der Ansprüche 19 bis 34, bei dem,

- die Steuerung durch eine zentrale Steuerung des Fahrzeugs bereitgestellt wird.

**36.** System nach einem der Ansprüche 19 bis 35, bei dem

- zur Erfassung von den Rädern des Fahrzeugs wirksamen Kräften bzw. Beschleunigungen jeweils einachsige oder zweiachsige Kraft- oder Beschleunigungssensoren oder Bewegungsdetektoren verwendet werden, vorzugsweise MEMS-Kraft- oder Beschleunigungssensoren.

## Claims

**1.** Method for the determination of a wheel position of wheels on a vehicle, having the following steps:

- determination of the particular Coriolis forces effective for wheels of a vehicle,
- comparison of the Coriolis forces determined for the wheels with one another, and

- determination of a wheel position of the wheels on the vehicle with the aid of the comparisons,

**characterised by** the following steps:

- determination of Coriolis forces effective for the vehicle, and
- comparison of the Coriolis forces determined for the wheels with one another using the Coriolis forces determined for the vehicle as the reference parameter.

**2.** Method according to claim 1, having the following step:

- determination of the particular Coriolis forces effective for wheels of the vehicle by determining Coriolis accelerations effective for the wheels.

**3.** Method according to one of the preceding claims, having the following step:

- determination of the wheel, for which essentially no or the smallest Coriolis forces have been determined, as the reserve wheel of the vehicle.

**4.** Method according to one of the preceding claims, having the following step:

- determination of the wheel, for which the greatest Coriolis forces have been determined, as the front wheel of the vehicle when the steps according to one of the preceding claims are carried out for a vehicle having two wheels.

**5.** Method according to one of the preceding claims, having the following step:

- determination of the wheel, for which the smallest Coriolis forces have been determined, as the rear wheel of the vehicle when the steps according to one of the preceding claims are carried out for a vehicle having two wheels.

**6.** Method according to one of the preceding claims, having the following steps:

- determination of the particular Coriolis forces effective for wheels of the vehicle such that signals (Cvl, Cvr, Chl, Chr) which each indicate the effective Coriolis forces and have different signs for wheels on different sides of the vehicle are generated, and
- determination of the wheels, for which signals which indicate the Coriolis forces and have the same sign have been determined, as wheels on one side of the vehicle when the steps according to one of the preceding claims are carried out for a vehicle having four wheels.

**7.** Method according to claim 6, wherein for generation of the signals which indicate effective Coriolis forces in each case a wheel sensor arrangement assigned to a wheel of the vehicle is used.

**8.** Method according to one of the preceding claims, having the following steps:

- determination of the Coriolis forces effective for the vehicle such that signals ($C_z$) which indicate the effective Coriolis forces and of which the signs differ for curves in different directions are generated.

**9.** Method according to one of the preceding claims, having the following steps:

- determination of the wheels which are arranged on one side of the vehicle and the wheels which are arranged on the other side of the vehicle by comparison of signs of signals (Cvl, Cvr, Chl, Chr) which indicate Coriolis forces effective for wheels of the vehicle and signs of signals ($C_z$) which indicate Coriolis forces effective for the vehicle.

**10.** Method according to one of the preceding claims, having the following step:

- determination of the wheels, for which essentially the same Coriolis forces have been determined and the Coriolis forces of which are smaller compared with Coriolis forces of the other wheels, as rear wheels of the vehicle.

**11.** Method according to claim 9, having the following step:

- determination of the wheels, the Coriolis forces of which are greater compared with Coriolis forces of the rear wheels, as front wheels of the vehicle.

**12.** Method according to one of claims 1 to 11, having the following steps:

- carrying out of the steps according to one of the preceding claims on a vehicle the front wheels of which have a camber,
- determination of the wheels, for which signals (Cvl, Cvr, Chl, Chr) which indicate Coriolis forces indicate Coriolis forces essentially of equal size and have different signs, as rear wheels, and
- determination of the remaining wheels, for which signals (Cvl, Cvr, Chl, Chr) which indicate Coriolis forces indicate Coriolis forces of different size and have different signs, as front wheels.

**13.** Method according to one of claims 1 to 11, having the following steps:

- carrying out of the step according to one of the preceding claims for a vehicle, the front wheels of which have a positive camber, and
- determination of the front wheel, the Coriolis forces of which are smaller compared with Coriolis forces of the other front wheel, as the inside-curve front wheel of the vehicle.

**14.** Method according to one of claims 1 to 11, having the following steps:

- carrying out of the steps according to one of the preceding claims for a vehicle, the front wheels of which have a negative camber, and
- determination of the front wheel, the Coriolis forces of which are greater compared with Coriolis forces of the other front wheel, as the inside-curve front wheel of the vehicle.

**15.** Method according to one of the preceding claims, having the following steps:

- determination of the particular path forces (Bvl, Bvr, Bhl, Bhr) effective for the wheels of the vehicle,
- comparison of the path forces (Bvl, Bvr, Bhl, Bhr) determined for the wheels with one another, and
- determination of a wheel position on different sides of the vehicle with the aid of the comparisons.

**16.** Method according to claim 15, wherein in the determination of the path forces wheel sensor arrangements assigned in each case to a wheel of the vehicle which develop the corresponding path forces and issue signals which indicate path forces are used.

**17.** Method according to one of the preceding claims, having the following steps:

- carrying out of the steps according to one of the preceding claims after each new start-up of the vehicle, and
- assignment of the wheel positions to the wheels until the next new start-up.

**18.** Method according to one of the preceding claims, having the following steps:

- carrying out of the steps according to one of the preceding claims after a first starting up of the vehicle or only after a wheel change, and
- assignment of the wheel positions to the wheels until the next wheel change.

**19.** System for determination of a wheel position of wheels on a vehicle, having:

- a control having a receiving device (An), and
- wheel units (REvl, REvr, REhl, REhr), which are each provided for a wheel of a vehicle and which each comprise

  - a wheel sensor arrangement for recording Coriolis forces effective for the corresponding wheel and for issuing signals (Cvl, Cvr, Chl, Chr) which indicate Coriolis forces determined, and
  - a transmission device for transmission of signals from the wheel sensor arrangement to the receiving device (An) of the control, wherein

- the control is set up to compare the Coriolis forces determined for the wheels with one another on the basis of the signals transmitted and to determine the wheel position of the wheels on the vehicle with the aid of the comparisons,

**characterised by**

- a central unit (ZE), which comprises

  - a central sensor arrangement for recording Coriolis forces effective for the vehicle and for issuing signals which indicate Coriolis forces determined, and
  - a central transmission device for transmission of signals of the central sensor arrangement to the receiving device of the control, wherein

- the control is set up to compare the Coriolis forces determined for the wheels with one another using the Coriolis forces determined for the vehicle as the reference parameter.

**20.** System according to claim 19, in which

- the control is configured to determine the wheel, for which essentially no or the smallest Coriolis forces have been determined, as the reserve wheel of the vehicle.

**21.** System according to claim 19 or 20, in which

- the control is configured to determine the wheel, for which the greatest Coriolis forces have been determined, as the front wheel of the vehicle if the vehicle is a vehicle having two wheels.

**22.** System according to one of claims 19 to 21, in which

- the control is configured to determine the wheel for which the smallest Coriolis forces have been determined, as the rear wheel of the vehicle if the vehicle is a vehicle having two wheels.

**23.** System according to one of claims 19 to 22, in which

- the wheel sensor devices are configured to determine the Coriolis forces effective for the wheels of a vehicle such that signals (Cvl, Cvr, Chl, Chr) which each indicate the effective Coriolis forces and have different signs for wheels on different sides of the vehicle are generated, and
- the control is configured to determine the wheels, for which signals which indicate Coriolis forces and have the same signs have been determined, as wheels on one side of the vehicle if the vehicle is a vehicle having four wheels.

**24.** System according to one of claims 19 to 23, in which

- the central unit (ZE) is configured to determine the Coriolis forces effective for the vehicle such that signals ($C_z$) which indicate the effective Coriolis forces and of which the signs differ for curves in different directions are generated.

**25.** System according to one of claims 19 to 24, in which

- the control is configured to determine the wheels which are arranged on one side of the vehicle and the wheels which are arranged on the other side of the vehicle by comparisons of signs of signals (Cvl, Cvr, Chl, Chr) which indicate Coriolis forces effective for wheels and signs of signals ($C_z$) which indicate Coriolis forces effective for the vehicle.

**26.** System according to one of claims 19 to 25, in which

- the control is configured to determine the wheels, for which essentially the same Coriolis forces have been determined and the Coriolis forces of which are smaller compared with Coriolis forces of the other wheels, as rear wheels of the vehicle.

**27.** System according to claim 26, in which

- the control is configured to determine the wheels, the Coriolis forces of which are greater compared with Coriolis forces of the rear wheels, as front wheels of the vehicle.

**28.** System according to one of claims 19 to 27 in use for a vehicle, the front wheels of which have a camber, in which

- the control is configured to determine the wheels, for which signals (Cvl, Cvr, Chl, Chr) which indicate Coriolis forces indicate Coriolis forces essentially of equal size and have different signs, as rear wheels, and
- the control is configured to determine the remaining wheels, for which signals (Cvl, Cvr, Chl, Chr) which indicate Coriolis forces indicate Coriolis forces of different size and have different signs, as front wheels.

**29.** System according to one of claims 19 to 28 in use for a vehicle the front wheels of which have a positive camber, in which

- the control is configured to determine the front wheel, the Coriolis forces of which are smaller compared with Coriolis forces of the other front wheel, as the inside-curve front wheel of the vehicle.

**30.** System according to one of claims 19 to 28 in use for a vehicle the front wheels of which have a negative camber, in which

- the control is configured to determine the front wheel, the Coriolis forces of which are greater compared with Coriolis forces of the other front wheel, as the inside-curve front wheel of the vehicle.

**31.** System according to one of claims 19 to 30, in which

- the wheel sensor arrangements are configured for recording the particular path forces effective for the corresponding wheel and for issuing signals (Bvl, Bvr, Bhl, Bhr) which indicate path forces determined, and
- the control is configured to compare the path forces determined for the wheels with one another and to determine wheel positions on different sides of the vehicle with the aid of the comparisons.

**32.** System according to one of claims 19 to 31, in which

- the wheel sensor arrangements each comprise at least one acceleration sensor in order to record Coriolis accelerations effective for the wheels of the vehicle for determination of the Coriolis forces effective for the wheels of the vehicle.

**33.** System according to claim 32, in which

- the wheel sensor arrangements are each set up to issue signals (Cvl, Cvr, Chl, Chr) which indicate the Coriolis accelerations determined, and
- the control is set up to determine the wheel positions of the wheels with the aid of the signals (Cvl, Cvr, Chl, Chr) which indicate the wheel positions of the wheels with the aid of the Coriolis accelerations.

**34.** System according to claim 32, in which

- the wheel sensor arrangements are each set up to issue signals (Cvl, Cvr, Chl, Chr), on the basis of the Coriolis accelerations determined, which indicate the particular Coriolis forces.

**35.** System according to one of claims 19 to 34, in which

- the control is provided by a central control of the vehicle.

**36.** System according to one of claims 19 to 35, in which

- for recording of forces or accelerations which are effective for wheels of the vehicle, monoaxial or biaxial force or acceleration sensors or movement detectors are in each case used, preferably MEMS force or acceleration sensors.

## Revendications

**1.** Procédé de détermination d'une position des roues d'un véhicule, comprenant les étapes suivantes :

- détection des forces de Coriolis actives pour les roues d'un véhicule,
- comparaison entre elles des forces de Coriolis détectées pour les roues, et
- détermination d'une position des roues sur le véhicule sur la base des comparaisons,

**caractérisé par** les étapes suivantes :

- détection des forces de Coriolis actives pour le véhicule
- comparaison entre elles des forces de Coriolis détectées pour les roues en recourant aux forces de Coriolis détectées pour le véhicule en tant que grandeur de référence.

**2.** Procédé selon la revendication 1, comprenant l'étape suivante :

- détection des forces de Coriolis actives pour les roues d'un véhicule par détection des accélérations de Coriolis actives pour les roues.

**3.** Procédé selon l'une des revendications précédentes, comprenant l'étape suivante :

- détermination de la roue pour laquelle sensiblement aucune force de Coriolis n'a été détectée, ou les forces de Coriolis minimales ont été détectées, comme roue de secours du véhicule.

**4.** Procédé selon l'une des revendications précédentes, comprenant l'étape suivante :

- détermination de la roue pour laquelle les forces de Coriolis maximales ont été détectées comme roue avant du véhicule, si les étapes selon l'une des revendications précédentes ont été exécutées pour un véhicule à deux roues.

**5.** Procédé selon l'une des revendications précédentes, comprenant l'étape suivante :

- détermination de la roue pour laquelle les forces de Coriolis minimales ont été détectées comme roue arrière du véhicule, si les étapes selon l'une des revendications précédentes ont été exécutées pour un véhicule à deux roues.

**6.** Procédé selon l'une des revendications précédentes, comprenant les étapes suivantes :

- détection des forces de Coriolis actives pour les roues d'un véhicule, de manière à générer des signaux (Cvl, Cvr, Chl, Chr) indicateurs des forces de Coriolis actives, pourvus de signes algébriques différents pour des roues sur des côtés différents du véhicule, et
- détermination des roues, pour lesquelles des signaux indicateurs des forces de Coriolis de même signe algébrique ont été détectés, comme roues sur un côté du véhicule, si les étapes selon l'une des revendications précédentes ont été exécutées pour un véhicule à quatre roues.

**7.** Procédé selon la revendication 6, où un dispositif à capteur de roue associé à chaque roue du véhicule est utilisé pour la génération des signaux indicateurs des forces de Coriolis.

**8.** Procédé selon l'une des revendications précédentes, comprenant l'étape suivante :

- détection des forces de Coriolis actives pour les roues d'un véhicule, de manière à générer des signaux ($C_z$) indicateurs des forces de Coriolis actives, dont les signes algébriques diffèrent pour des virages dans des directions différentes.

**9.** Procédé selon l'une des revendications précédentes, comprenant l'étape suivante :

- détermination des roues disposées sur un côté du véhicule, et des roues disposées sur l'autre côté du véhicule par comparaison des signes algébriques des signaux (Cvl, Cvr, Chl, Chr) indicateurs des forces de Coriolis actives pour les roues du véhicule et des signes algébriques des signaux ($C_Z$) indicateurs des forces de Coriolis actives pour le véhicule.

**10.** Procédé selon l'une des revendications précédentes, comprenant l'étape suivante :

- détermination des roues pour lesquelles des forces de Coriolis sensiblement égales ont été détectées et dont les forces de Coriolis sont inférieures comparativement aux forces de Coriolis des autres roues, comme roues arrière du véhicule.

**11.** Procédé selon la revendication 9, comprenant l'étape suivante :

- détermination des roues dont les forces de Coriolis sont supérieures comparativement aux forces de Coriolis des roues arrière, comme roues avant du véhicule.

**12.** Procédé selon l'une des revendications 1 à 11, comprenant les étapes suivantes :

- exécution des étapes selon l'une des revendications précédentes sur un véhicule dont les roues avant présentent un carrossage,
- détermination des roues pour lesquelles des signaux (Cvl, Cvr, Chl, Chr) indicateurs des forces de Coriolis indiquent des forces de Coriolis sensiblement égales et présentent des signes algébriques différents, comme roues arrière, et
- détermination des autres roues pour lesquelles des signaux (Cvl, Cvr, Chl, Chr) indicateurs des forces de Coriolis indiquent des forces de Coriolis différentes et présentent des signes algébriques différents, comme roues avant.

**13.** Procédé selon l'une des revendications 1 à 11, comprenant les étapes suivantes :

- exécution des étapes selon l'une des revendications précédentes pour un véhicule dont les roues avant présentent un carrossage positif, et
- détermination de la roue avant dont les forces de Coriolis sont inférieures comparativement aux forces de Coriolis de l'autre roue avant, comme roue avant du véhicule à l'intérieur du virage.

**14.** Procédé selon l'une des revendications 1 à 11, comprenant les étapes suivantes :

- exécution des étapes selon l'une des revendications précédentes pour un véhicule dont les roues avant présentent un carrossage négatif, et
- détermination de la roue avant dont les forces de Coriolis sont supérieures comparativement aux forces de Coriolis de l'autre roue avant, comme roue avant du véhicule à l'intérieur du virage.

**15.** Procédé selon l'une des revendications précédentes, comprenant les étapes suivantes :

- détection des forces de traction (Bvl, Bvr, Bhl, Bhr) actives pour les roues du véhicule,
- comparaison entre elles des forces de traction (Bvl, Bvr, Bhl, Bhr) détectées pour les roues, et
- détermination d'une position des roues sur différents côtés du véhicule sur la base des comparaisons.

**16.** Procédé selon la revendication 15, où des dispositifs à capteur de roue associés chacun à une roue du véhicule sont utilisés pour la détection des forces de traction, lesquels développent les forces de traction correspondantes et émettent des signaux indicateurs des forces de traction.

**17.** Procédé selon l'une des revendications précédentes, comprenant les étapes suivantes :

- exécution des étapes selon l'une des revendications précédentes après chaque démarrage du véhicule, et
- affectation des positions de roue aux roues jusqu'au prochain démarrage.

**18.** Procédé selon l'une des revendications précédentes, comprenant les étapes suivantes :

- exécution des étapes selon l'une des revendications précédentes après une première mise en service du véhicule ou seulement après un changement de roue, et
- affectation des positions de roue aux roues jusqu'au prochain changement de roue.

**19.** Système de détermination d'une position des roues d'un véhicule, comportant :

- une commande avec un dispositif de réception (An), et

- des unités de roue (REvl, REvr, REhl, REhr) prévues chacune pour une roue d'un véhicule et comprenant chacune
- un dispositif à capteur de roue pour la détection des forces de Coriolis actives pour la roue correspondante et pour l'émission de signaux (Cvl, Cvr, Chl, Chr) indicateurs des forces de Coriolis détectées, et
- un dispositif de transmission pour la transmission de signaux du dispositif à capteur de roue au dispositif de réception (An) de la commande,
- la commande étant prévue pour comparer entre elles les forces de Coriolis détectées pour les roues à partir des signaux transmis et pour déterminer la position des roues du véhicule sur la base des comparaisons,

**caractérisé par**

- une unité centrale (ZE), qui comprend
- un dispositif à capteur central pour la détection des forces de Coriolis actives pour le véhicule et pour l'émission de signaux indicateurs des forces de Coriolis détectées, et
- un dispositif de transmission central pour la transmission de signaux du dispositif à capteur central au dispositif de réception de la commande,
- la commande étant prévue pour comparer entre elles les forces de Coriolis détectées pour les roues en recourant aux forces de Coriolis détectées pour le véhicule en tant que grandeur de référence.

**20.** Système selon la revendication 19, où

- la commande est prévue pour déterminer la roue pour laquelle sensiblement aucune force de Coriolis n'a été détectée, ou les forces de Coriolis minimales ont été détectées, comme roue de secours du véhicule.

**21.** Système selon la revendication 19 ou 20, où

- la commande est prévue pour déterminer la roue pour laquelle les forces de Coriolis maximales ont été détectées comme roue avant du véhicule, si le véhicule est un véhicule à deux roues.

**22.** Système selon l'une des revendications 18 à 21, où

- la commande est prévue pour déterminer la roue pour laquelle les forces de Coriolis minimales ont été détectées comme roue arrière du véhicule, si le véhicule est un véhicule à deux roues.

**23.** Système selon l'une des revendications 19 à 22, où

- les dispositifs à capteur de roue sont réalisés pour détecter les forces de Coriolis actives pour les roues d'un véhicule, de manière à générer des signaux (Cvl, Cvr, Chl, Chr) indicateurs des forces de Coriolis actives, pourvus de signes algébriques différents pour des roues sur des côtés différents du véhicule, et
- la commande est prévue pour déterminer les roues, pour lesquelles des signaux indicateurs des forces de Coriolis de même signe algébrique ont été détectés, comme roues sur un côté du véhicule, si le véhicule est un véhicule à quatre roues.

**24.** Système selon l'une des revendications 19 à 23, où

- l'unité centrale (ZE) est prévue pour détecter les forces de Coriolis actives pour le véhicule, de manière à générer des signaux ($C_z$) indicateurs des forces de Coriolis actives, dont les signes algébriques diffèrent pour des virages dans des directions différentes.

**25.** Système selon l'une des revendications 19 à 24, où

- la commande est prévue pour déterminer les roues disposées sur un côté du véhicule, et les roues disposées sur l'autre côté du véhicule par comparaison des signes algébriques des signaux (Cvl, Cvr, Chl, Chr) indicateurs des forces de Coriolis actives pour les roues et des signes algébriques des signaux ($C_z$) indicateurs des forces de Coriolis actives pour le véhicule.

**26.** Système selon l'une des revendications 19 à 25, où

- la commande est prévue pour déterminer les roues pour lesquelles des forces de Coriolis sensiblement égales ont été détectées et dont les forces de Coriolis sont inférieures comparativement aux forces de Coriolis des autres roues, comme roues arrière du véhicule.

**27.** Système selon la revendication 26, où

- la commande est prévue pour déterminer les roues dont les forces de Coriolis sont supérieures comparativement aux forces de Coriolis des roues arrière, comme roues avant du véhicule.

**28.** Système selon l'une des revendications 19 à 27 pour utilisation sur un véhicule dont les roues avant présentent un carrossage, où

- la commande est prévue pour déterminer les roues pour lesquelles des signaux (Cvl, Cvr, Chl, Chr) indicateurs des forces de Coriolis indiquent des forces de Coriolis sensiblement égales et présentent des signes algébriques différents, comme roues arrière, et où
- la commande est prévue pour déterminer les autres roues pour lesquelles des signaux (Cvl, Cvr, Chl, Chr) indicateurs des forces de Coriolis indiquent des forces de Coriolis différentes et présentent des signes algébriques différents, comme roues avant.

**29.** Système selon l'une des revendications 19 à 28 pour utilisation sur un véhicule dont les roues avant présentent un carrossage positif, où

- la commande est prévue pour déterminer la roue avant dont les forces de Coriolis sont inférieures comparativement aux forces de Coriolis de l'autre roue avant, comme roue avant du véhicule à l'intérieur du virage.

**30.** Système selon l'une des revendications 19 à 28 pour utilisation sur un véhicule dont les roues avant présentent un carrossage négatif, où

- la commande est prévue pour déterminer la roue avant dont les forces de Coriolis sont supérieures comparativement aux forces de Coriolis de l'autre roue avant, comme roue avant du véhicule à l'intérieur du virage.

**31.** Système selon l'une des revendications 19 à 30, où

- les dispositifs à capteur de roue sont prévus pour détecter des forces de traction actives pour les roues correspondantes du véhicule et pour émettre des signaux (Bvl, Bvr, Bhl, Bhr) indicateurs des forces de traction détectées pour les roues, et où
- la commande est prévue pour comparer entre elles des forces de traction détectées pour les roues, et déterminer des positions de roue sur différents côtés du véhicule sur la base des comparaisons.

**32.** Système selon l'une des revendications 19 à 31, où

- les dispositifs à capteur de roue comprennent chacun au moins un capteur d'accélération pour détecter les forces de Coriolis actives pour les roues d'un véhicule par détection des accélérations de Coriolis actives pour les roues.

**33.** Système selon la revendication 32, où

- les dispositifs à capteur de roue sont prévus chacun pour émettre des signaux (Cvl, Cvr, Chl, Chr) indicateurs des accélérations de Coriolis détectées, et où
- la commande est prévue pour déterminer les positions des roues sur la base des signaux (Cvl, Cvr, Chl, Chr) indicateurs des accélérations de Coriolis.

**34.** Système selon la revendication 32, où

- les dispositifs à capteur de roue sont prévus chacun pour émettre des signaux (Cvl, Cvr, Chl, Chr) indicateurs des forces de Coriolis correspondantes à partir des accélérations de Coriolis détectées.

**35.** Système selon l'une des revendications 19 à 34, où

- la commande est réalisée par une commande centrale du véhicule.

**36.** Système selon l'une des revendications 19 à 35, où

- des capteurs de force ou d'accélération ou des détecteurs de déplacement à un ou deux axes, préférentiellement des capteurs de force ou d'accélération MEMS, sont utilisés pour détecter les forces ou les accélérations exercées par les roues du véhicule.

FIG. 1

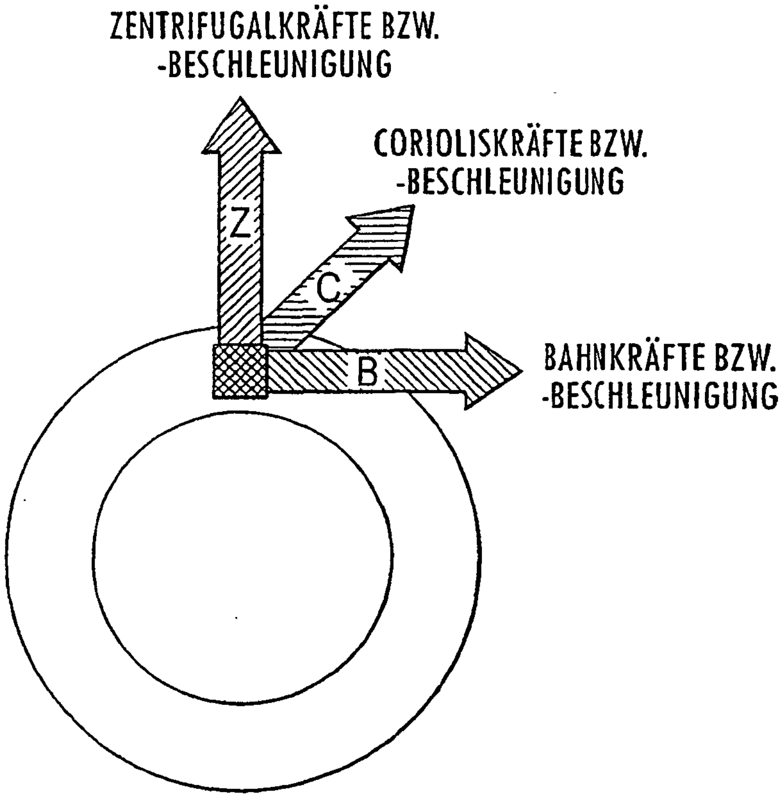
ZENTRIFUGALKRÄFTE BZW.
-BESCHLEUNIGUNG
CORIOLISKRÄFTE BZW.
-BESCHLEUNIGUNG
Z
C
B
BAHNKRÄFTE BZW.
-BESCHLEUNIGUNG

FIG. 2

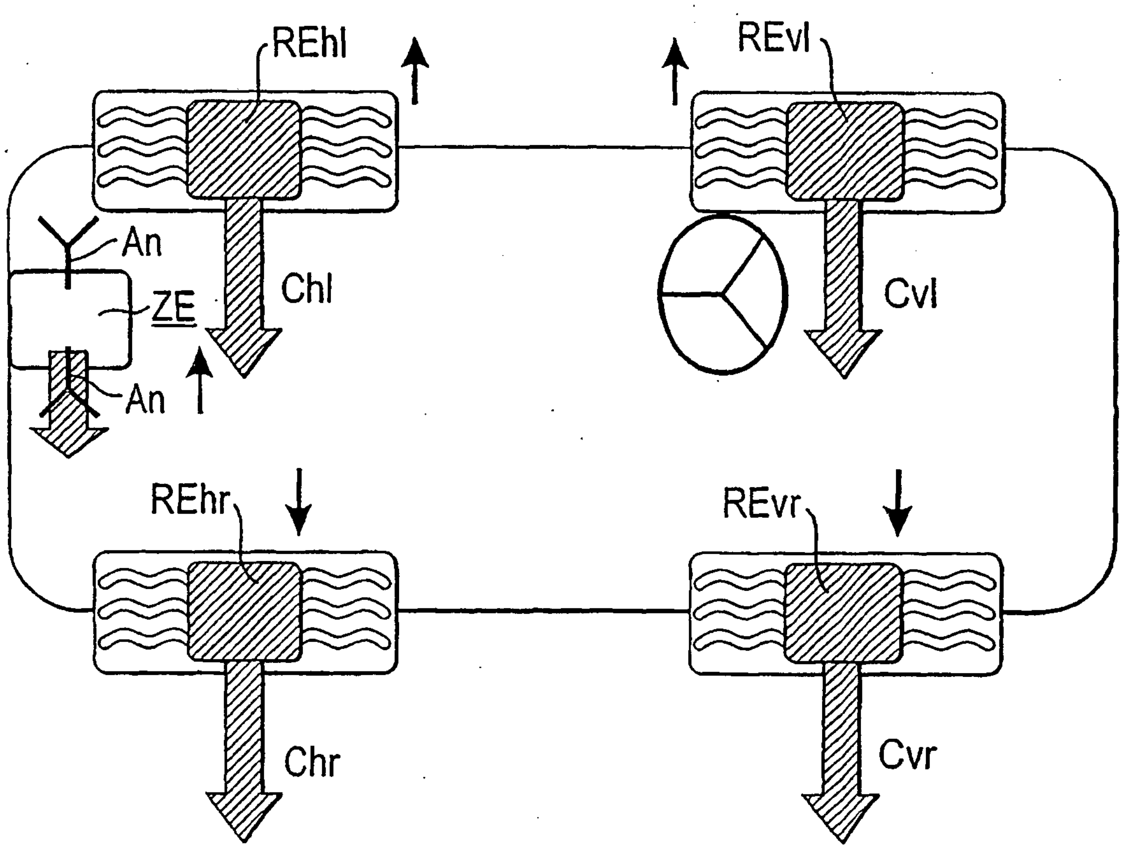

FIG. 3

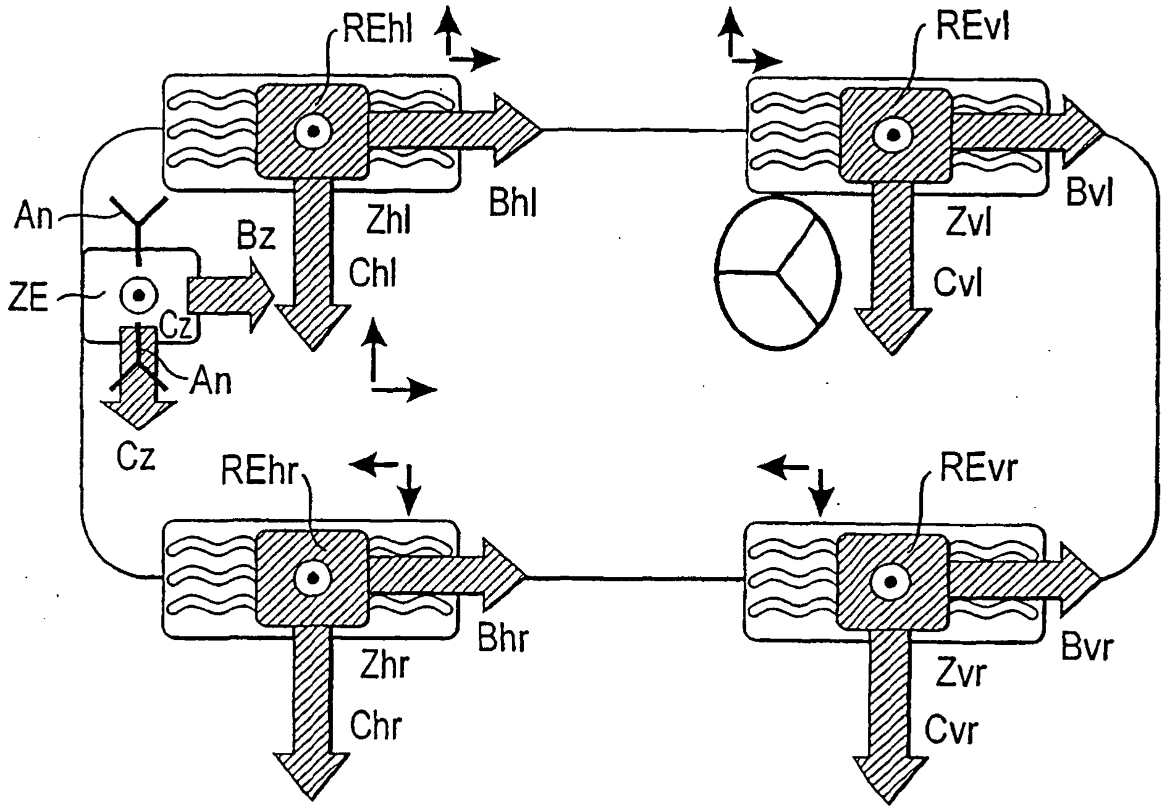
REhl
REvl
An
Bz
Zhl
Bhl
Zvl
Bvl
ZE
Chl
Cvl
Cz
An
Cz
REhr
REvr
Zhr
Bhr
Zvr
Bvr
Chr
Cvr

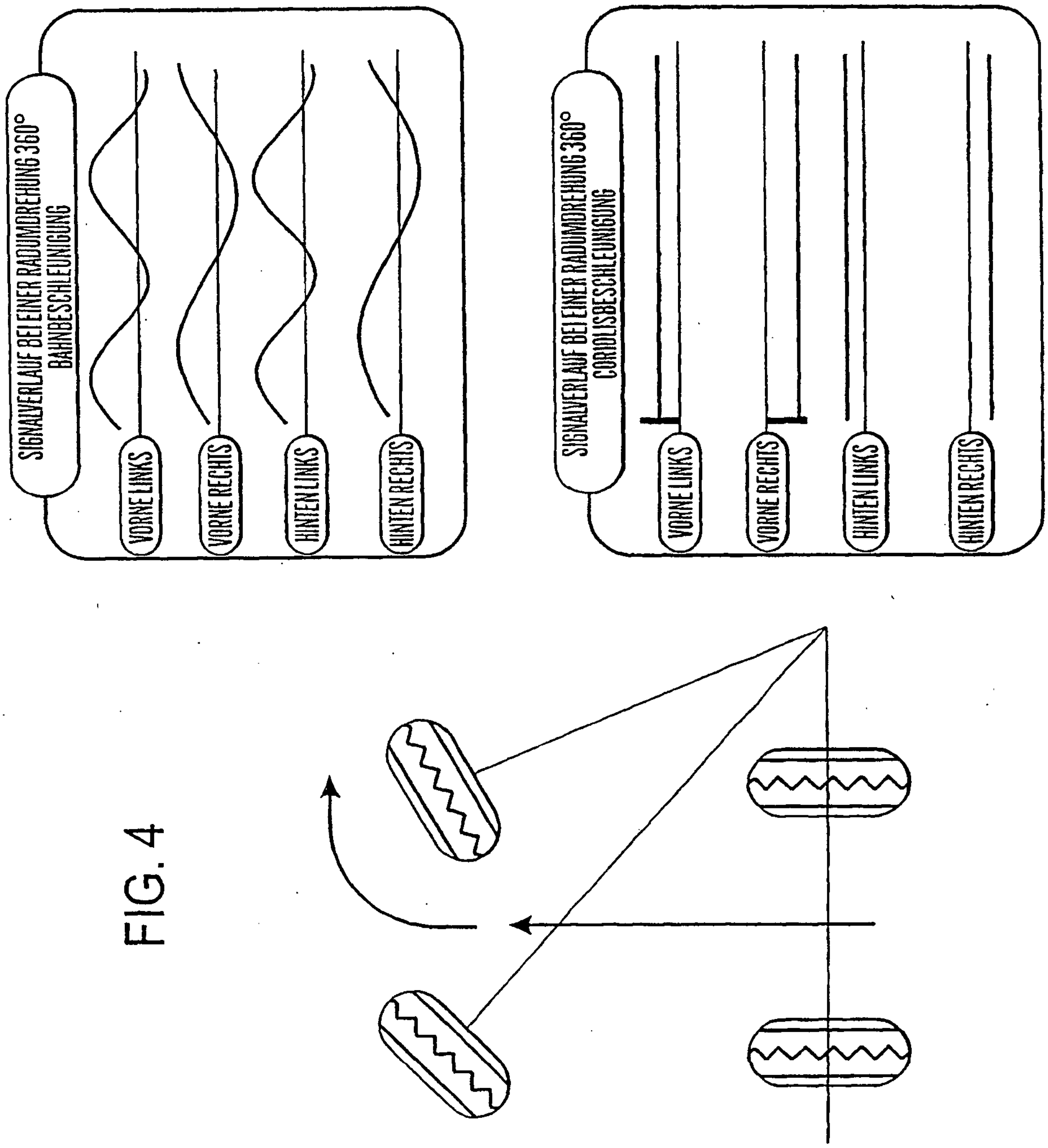
SIGNALVERLAUF BEI EINER RADUMDREHUNG 360°
BAHNBESCHLEUNIGUNG
VORNE LINKS
VORNE RECHTS
HINTEN LINKS
HINTEN RECHTS
SIGNALVERLAUF BEI EINER RADUMDREHUNG 360°
CORIOLISBESCHLEUNIGUNG
VORNE LINKS
VORNE RECHTS
HINTEN LINKS
HINTEN RECHTS

FIG. 4

FIG. 5

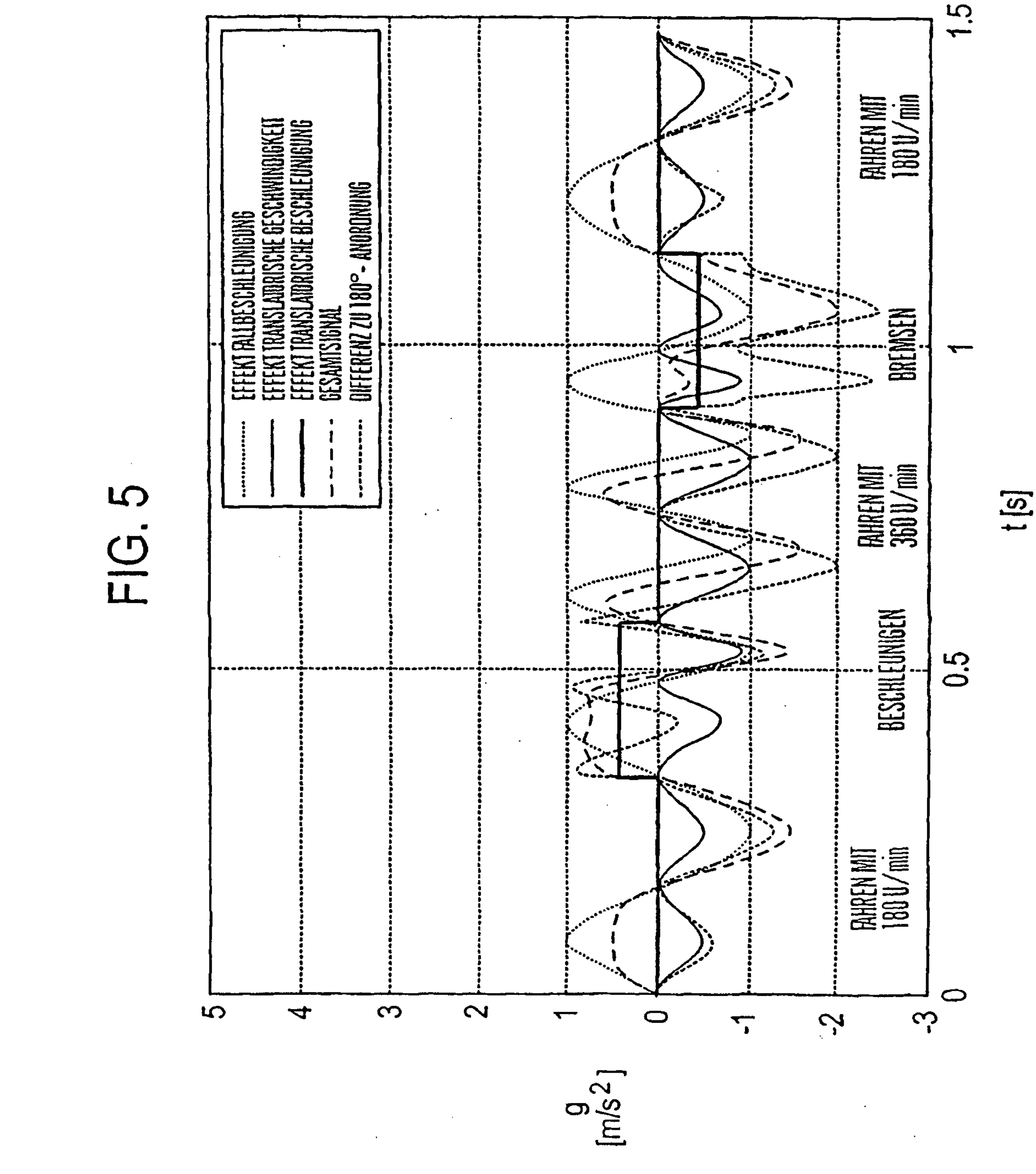
EFFEKT FALLBESCHLEUNIGUNG
EFFEKT TRANSLATORISCHE GESCHWINDIGKEIT
EFFEKT TRANSLATORISCHE BESCHLEUNIGUNG
GESAMTSIGNAL
DIFFERENZ ZU 180°- ANORDNUNG
FAHREN MIT 180 U/min
BESCHLEUNIGEN
FAHREN MIT 360 U/min
BREMSEN
FAHREN MIT 180 U/min
g [m/s2]
t [s]
5
4
3
2
1
0
-1
-2
-3
0
0.5
1
1.5

FIG. 6

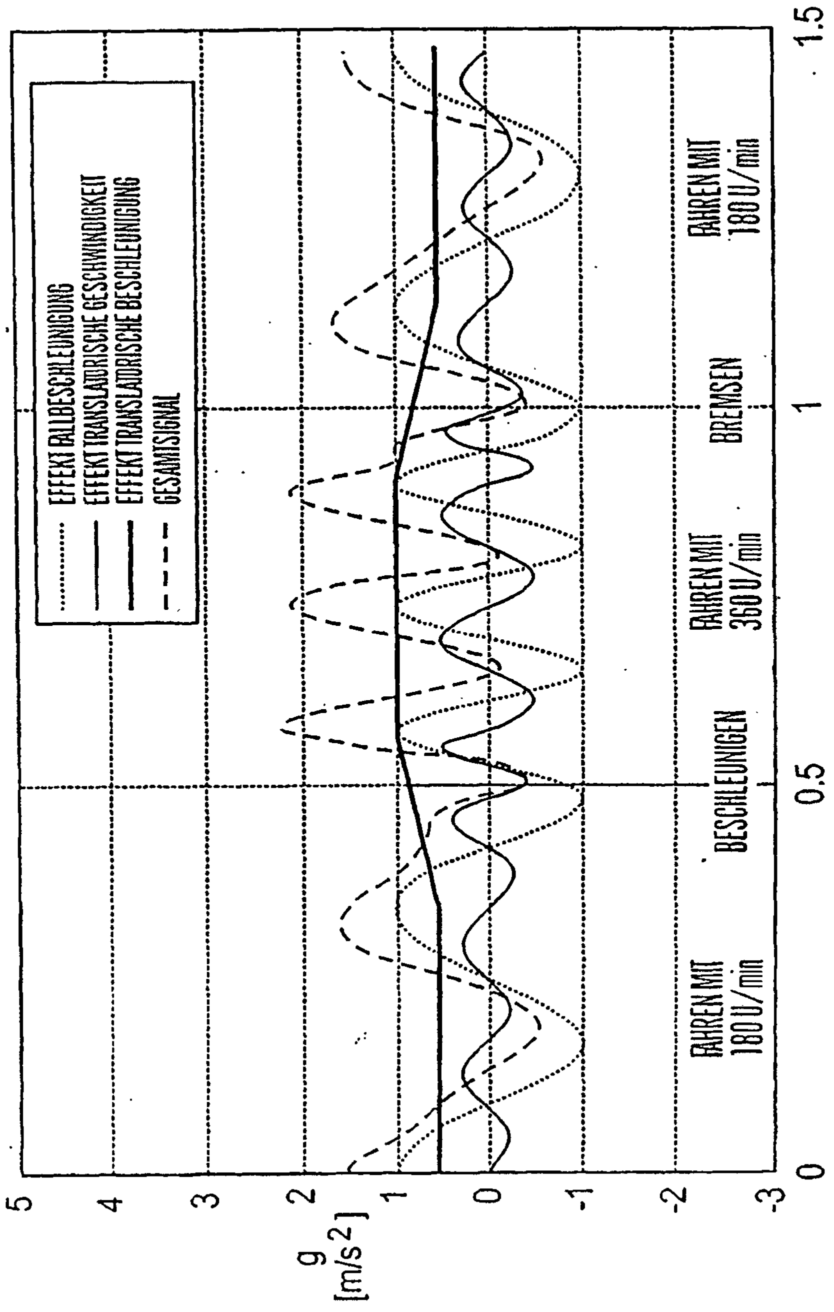
EFFEKT FALLBESCHLEUNIGUNG
EFFEKT TRANSLATORISCHE GESCHWINDIGKEIT
EFFEKT TRANSLATORISCHE BESCHLEUNIGUNG
GESAMTSIGNAL
FAHREN MIT 180 U/min
BESCHLEUNIGEN
FAHREN MIT 360 U/min
BREMSEN
FAHREN MIT 180 U/min
g [m/s2]
5
4
3
2
1
0
-1
-2
-3
t [s]
0
0.5
1
1.5

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- DE 19608478 A1
- DE 10316074 A1
- US 6446502 B1